(19) **Europäisches Patentamt**
**European Patent Office**
**Office européen des brevets**

(11) **EP 4 263 653 B1**

(12) **EUROPÄISCHE PATENTSCHRIFT**

(45) Veröffentlichungstag und Bekanntmachung des Hinweises auf die Patenterteilung:
**03.09.2025 Patentblatt 2025/36**

(21) Anmeldenummer: **21830429.3**

(22) Anmeldetag: **09.12.2021**

(51) Internationale Patentklassifikation (IPC):
**C08G 18/24** (2006.01) **C08G 18/56** (2006.01)
**C08G 18/76** (2006.01) **C08G 6/00** (2006.01)
**C08G 2/08** (2006.01)

(52) Gemeinsame Patentklassifikation (CPC):
**C08G 18/7621; C08G 2/08; C08G 18/246; C08G 18/56**

(86) Internationale Anmeldenummer:
**PCT/EP2021/085078**

(87) Internationale Veröffentlichungsnummer:
**WO 2022/128748 (23.06.2022 Gazette 2022/25)**

(54) **VERFAHREN ZUR HERSTELLUNG EINES MONOLS ODER POLYOLS UMFASSEND EINEN POLYOXYMETHYLEN-BLOCK**

METHOD FOR PREPARING A MONOL OR POLYOL COMPRISING A POLYOXYMETHYLENE BLOCK

PROCÉDÉ DE FABRICATION D'UN MONOL OU D'UN POLYOL COMPRENANT UN BLOC DE POLYOXYMÉTHYLÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2020 EP 20215348**

(43) Veröffentlichungstag der Anmeldung:
**25.10.2023 Patentblatt 2023/43**

(73) Patentinhaber: **Power2Polymers GmbH**
**52068 Aachen (DE)**

(72) Erfinder:
• **MACHAT, Martin**
**50735 Köln (DE)**
• **VASIUTA, Roman**
**52074 Aachen (DE)**
• **LANGANKE, Jens**
**53894 Mechernich (DE)**
• **GUERTLER, Christoph**
**50735 Köln (DE)**

(74) Vertreter: **Richly & Ritschel Patentanwälte PartG mbB**
**Sattlerweg 20**
**51429 Bergisch Gladbach (DE)**

(56) Entgegenhaltungen:
EP-A1- 3 498 743      EP-A1- 3 653 657
DE-A1- 2 649 800      US-A- 3 575 930

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung beschreibt ein Verfahren zur Herstellung eines Monols oder Polyols umfassend einen Polyoxymethylen-Block.

Blockcopolymere enthaltend Polyoxymethylen-Einheiten neben anderen Polymerisat- und Polykondensat-Einheiten werden beispielsweise in JP 2007 211082 A, WO 2004/096746 A1, GB 807589, EP 1 418 190 A1, US 3,754,053, US 3,575,930, US 2002/0016395, EP 3 129 419 B1 und JP 04-306215 beschrieben.

EP 3 653 657 A1 offenbart ein Verfahren zur Herstellung von Präpolymeren umfassend einen Polyoxymethylen-Block, durch ein solches Verfahren erhältliche Präpolymere sowie Mischungen aus diesen Präpolymeren mit OH-reaktiven Verbindungen, bevorzugt Polyisocyanaten.

US 3575930 A beschreibt ein Verfahren zur Herstellung von NCO-Präpolymeren durch Umsetzung von niedermolekularem polymeren Formaldehyd (pFA) mit Diisocyanaten im Überschuss. Die niedermolekularen pFA Fraktionen werden durch Extraktion mit siedendem Dioxan (Sdp. 101 °C) und anschließender Filtration erhalten und sind nicht lagerbar. Darüber hinaus ist ein energieintensiver azeotroper Destillationsschritt mit Benzol notwendig, um die niedermolekularen pFA Fraktionen in Lösung von Wasser zu befreien bevor das niedermolekulare polymere Formaldehyd mit Diisocyanaten umgesetzt werden kann. Zudem finden die beschriebene Azeotropdestillation sowie die Umsetzung von pFA mit Diisocyanaten bei relativ hohen Temperaturen statt, so dass Zersetzungsreaktionen unter Bildung von erheblichen Mengen monomerem Formaldehyd stattfinden.

In DE 26 49 800 wird ein Verfahren zur Herstellung von Polyoxymethylen in Gegenwart von Katalysatoren beschrieben, indem gasförmiges, wasserfreies Formaldehyd in ein Reaktionsmedium eingeleitet wird, welches ein organische Lösungsmittel wie n-Heptan sowie einen polymeren Katalysator enthält. Hierbei werden unter Polyoxymethylen Formaldehydpolymere mit einem Molekulargewicht von wenigstens 10.000 g/mol verstanden.

In EP 3 498 743 A1 wird ein Verfahren zur Herstellung eines Polyoxymethylen-Gruppen enthaltenden Präpolymers offenbart, umfassend den Schritt der Reaktion einer Polyolkomponente , wobei die Polyolkomponente ein OH-Endgruppen enthaltendes Polyoxymethylen umfasst, mit einer gegenüber OH-Gruppen reaktiven Verbindung, wobei die Reaktion in Gegenwart einer ionischen Fluorverbindung durchgeführt wird. In den Beispielen wird hierbei ein monofunktionelles Isocyanat als OH-Gruppen reaktive Verbindung eingesetzt, so dass infolge der Reaktion des OH-Endgruppen enthaltendes Polyoxymethylens mit dem monofunktionellen Isocyanat keine für nachfolgende PU-Reaktion notwendige NCO-Funktionalitäten im Präpolymer verbleiben.

WO 2004/096746 A1 offenbart die Reaktion von Formaldehyd-Oligomeren mit Alkylenoxiden oder Isocyanaten. Dabei wird eine Formalinlösung zunächst bei 80 °C und 120 mbar eingedampft und anschließend mit Propylenoxid in Gegenwart eines basischen Katalysators umgesetzt, wobei niedermolekulare Addukte aus 2 Molekülen Propylenoxid und 2 Molekülen Formaldehyd gebildet werden.

In WO 2014/095679 A1 wird ein Verfahren zur Herstellung von NCO-modifizierten Polyoxymethylen-Block-Copolymeren offenbart, umfassend den Schritt der Polymerisation von Formaldehyd in einem Reaktionsgefäß in Gegenwart eines Katalysators, wobei die Polymerisation von Formaldehyd weiterhin in Gegenwart einer Starterverbindung mit mindestens 2 Zerewitinoffaktiven H-Atomen unter Erhalt eines Zwischenprodukts erfolgt und dieses mit einem Isocyanat umgesetzt wird.

In EP 3498743 A1 wird ein Verfahren zur Herstellung eines Polyoxymethylen-Gruppen enthaltenden Präpolymers, umfassend den Schritt der Reaktion einer Polyolkomponente mit einer gegenüber OH-Gruppen reaktiven Verbindung, wobei die Polyolkomponente ein OH-Endgruppen enthaltendes Polyoxymethylen umfasst, dessen OH-Endgruppen nicht Teil von Carboxylgruppen sind. Die Reaktion wird in Gegenwart einer ionischen Fluorverbindung durchgeführt, wobei die ionische Fluorverbindung eine koordinativ gesättigte Verbindung ist. Nachteilig an dieser Verfahrensweise ist, dass Fluorverbindungen vor der Umsetzung der Präpolymere zu PolyurethanSchäumen abgetrennt werden müssen, da sie sich negativ auf die Schaumbildungsreaktionen auswirken können.

In WO 2020/099601 A1 wird ein Verfahren zur Herstellung eines ein NCO-terminiertes Präpolymers mithilfe der Reaktiv-Soxhlet-Extraktion offenbart, bei dem eine Lösung bestehend aus polymerem Formaldehyd in einem aprotischen Lösungsmittel mit einer Siedetemperatur von kleiner oder gleich 60 °C bei 1 bara aus einem ersten Behälter in einen zweiten Behälter enthaltend ein Polyisocyanat überführt und zum NCO-terminiertes Präpolymer umgesetzt wird. Das Lösungsmittel wird dabei kontinuierlich aus dem zweiten Behälter in den ersten Behälter zurückgeführt.

In US 1948069 A wird ein Verfahren zur Herstellung von löslichem Paraformaldehyd durch Azeotropdestillation einer Mischung aus einer wässrigen Formaldehyd-Lösung und organischen Lösungsmitteln offenbart, wobei im konkreten Ausführungsbeispiel eine Azeotropdestillation einer ca. 40 Vol-% wässrigen Formaldehydlösung mit Essigsäureethylester bei 69 bis 70°C durchgeführt wird und das resultierende Paraformaldehyd durch Filtration oder leichtes Pressen aus der Lösung abgetrennt und anschließend bei 100 °C getrocknet wird..

In US 2,823,237 wird ein Verfahren zur Herstellung von hochlöslichem Paraformaldehyd offenbart, wobei eine methanolische Formaldehyd Lösung mit einem Wasseranteil von nicht mehr als 10 Gew.-% bei einer Temperatur von 10 °C bis 35 °C im Vakuum destilliert wird.

Nach dem bisherigen Stand der Technik wird die Umsetzung von polymerem Formaldehyd entweder bei verhältnismäßig hohen Temperaturen durchgeführt, wobei eine Depolymerisation der polymeren Formaldehyd-Verbindungen eintritt oder es müssen teilweise zusätzliche Fluor-haltige Verbindungen als Lösungsvermittler zugesetzt werden, um das Lösungsverhalten des schwerlöslichen polymeren Formaldehyds zu verbessern, welches die nachfolgenden Reaktionen wie beispielsweise der Polyurethanisierungsreaktion stören kann und einem zusätzlichen Verfahrensschritt abgetrennt werden muss. Weiterhin wird auch die Verwendung von methanolischen Formaldehyd Lösungen offenbart, wobei jedoch monofunktionelles Methanol die mittlere Funktionalität des Präpolymers herabsetzt. Zudem ist auch ein hoher Anteil von physikalisch gebundenen Wasser in Formaldehyd Lösungen für die anschließende Umsetzung von Hydroxylgruppen-haltigen Formaldehyd mit Hydroxylgruppen-reaktiven Verbindungen wie beispielsweise Polyisocyanaten zu Präpolymer-Verbindungen bevorzugt NCO-terminierte Präpolymeren von Nachteil, da infolge der unerwünschten Nebenreaktion des Wassers mit dem Polyisocyanat signifikante Mengen an Harnstoff gebildet werden.

Ausgehend vom Stand der Technik ergab sich die Aufgabe, ein einfach aufskalierbares und thermisch schonendes Verfahren bereitzustellen, um schwerlösliche polymere Formaldehyde oder Formalinlösungen in technisch prozessierbare, gut lösliche Polyole mit einer einstellbaren Anzahl an Oxymethylen-Wiederholungseinheiten, ohne Zusatz unnötiger Lösungsvermittler oder monofunktioneller Co-Solvenzien zu überführen, so dass die löslichen Verbindungen einerseits chemisch stabil und somit lagerbar sind als auch direkt in nachgelagerten Folgereaktionen wie beispielsweise zur Herstellung reaktiver Präpolymer-Verbindungen bevorzugt NCO-terminierte Präpolymere eingesetzt werden können. Die erfindungsgemäßen Monole oder Polyole umfassend einen Polyoxymethylen-Block sollen hierbei auch einen Anteil von physikalisch gebundenen Wasser von weniger als 2.0 Gew.-% bevorzugt weniger als 1.0 Gew.-% besonders bevorzugt weniger als 0.5 Gew.-%aufweisen, damit die Harnstoffbildung als unerwünschte Nebenreaktion in der nachfolgenden Umsetzung des Monols oder Polyols mit Polyisocyanaten zu NCO-terminierten Präpolymeren reduziert wird. Ein weiterer Aspekt des erfindungsgemäßen Verfahrens ist auch die Reduktion des Lösungsmittelbedarfs.

Erfindungsgemäß gelöst wird die Aufgabe durch ein Verfahren zur Herstellung eines Monols oder Polyols umfassend einen Polyoxymethylen-Block gemäß Anspruch 1, das Monol oder Polyols gemäß Anspruch 11, ein Verfahren zur Herstellung eines Präpolymers gemäß Anspruch 13 und das daraus resultierende Präpolymer gemäß Anspruch 14 sowie ein Verfahren zur Herstellung eines Umsetzungsproduktes bevorzugt eines Polyurethans gemäß Anspruch 15. Vorteilhafte Weiterbildungen sind in den Unteransprüchen angegeben. Sie können beliebig kombiniert werden, sofern sich aus dem Kontext nicht eindeutig das Gegenteil ergibt.

Erfindungsgemäß gelöst wird diese Aufgabe durch ein Verfahren zur Herstellung eines Monols oder Polyols umfassend einen Polyoxymethylen-Block bevorzugt eines Polyols umfassend einen Polyoxymethylen-Block, wobei das Verfahren folgende Schritte umfasst:

i) Bereitstellen eines Formaldehyd-haltigen Gemisches (A) enthaltend Formaldehyd in einem polaren Lösungsmittel (A) und optional in einem polaren Lösungsmittel (C);

ii) Zugabe eines unpolaren Lösungsmittels (B) zur Formaldehyd-haltigen Lösung i) oder einer Formaldehyd-haltigen Suspension i) unter Bildung einer Mischung ii);

iii) Entfernen des Lösungsmittels (A), des Lösungsmittels (B) und optional des Lösungsmittels (C) aus der Mischung ii) unter Bildung eines Monols oder Polyols umfassend einen Polyoxymethylen-Block,

wobei die Entfernung des Lösungsmittels (A), des Lösungsmittels (B) und optional des Lösungsmittels (C) in Schritt iii) bei einer Temperatur von 0 °C bis 80 °C, bevorzugt von 30 °C bis 60 °C und ein Druck von 0.01 mbara bis 5000 mbara, bevorzugt von 0.1 mbara bis 2000 mbara besonders bevorzugt von 1 mbara bis 1000 mbara und ganz besonders bevorzugt von 1 mbara bis 500 mbara erfolgt;

wobei das Lösungsmittel (A) ungleich dem Lösungsmittel (B) ist;

und wobei das Lösungsmittel (B) und optional das Lösungsmittel (C) keine OH-reaktiven funktionellen Gruppen enthalten sowie selbst nicht mit OH-reaktiven Verbindungen reagiert.

Die Verwendung des Worts ein im Zusammenhang mit zählbaren Größen ist hierbei und im Folgenden nur dann als Zahlwort zu verstehen, wenn dies aus dem Zusammenhang hervorgeht (bspw. durch die Formulierung "genau ein"). Ansonsten umfassen Ausdrücke wie "eine polymere Formaldehydverbindung" etc. immer auch solche Ausführungsformen, in denen zwei oder mehr polymere Formaldehydverbindungen etc. eingesetzt werden.

Nachfolgend wird die Erfindung im Detail erläutert. Verschiedene Ausführungsformen sind dabei beliebig miteinander kombinierbar, solange sich für den Fachmann aus dem Kontext nicht eindeutig das Gegenteil ergibt.

Unter einem Monol ist gemäß der gängigen fachlichen Definition eine Verbindung mit einer terminalen Hydroxylgruppe zu verstehen, wohingegen unter einem Polyol eine Verbindung mit mehr als einer terminalen Hydroxylgruppe, bevorzugt 2 bis 10, besonders bevorzugt von 2 bis 5, ganz besonders bevorzugt von 2 bis 3 terminalen Hydroxylgruppen zu verstehen ist.

Bevorzugt wird erfindungsgemäß ein Polyols umfassend einen Polyoxymethylen-Block hergestellt.

In einer Ausführungsform des erfindungsgemäßen Verfahrens ist das Formaldehyd-haltige Gemisch (A) erhältlich durch Mischen von polymerem Formaldehyd mit dem polaren Lösungsmittel (A) und optional dem polaren Lösungsmittel (C). In Abhängigkeit von der Konzentration bzw. Löslichkeit des polymeren Formaldehyds in dem polaren Lösungsmittel (A) und optional dem polaren Lösungsmittel (C) resultiert die Formaldehyd-haltige Suspension i) oder eine Formaldehyd-haltige Lösung i) bevorzugt eine Formaldehyd-haltige Suspension i).

In einer Ausführungsform des erfindungsgemäßen Verfahrens ist das Formaldehyd-haltige Gemisch (A) eine Formaldehyd-haltige Lösung i) oder eine Formaldehyd-haltige Suspension i) bevorzugt eine Formaldehyd-haltige Suspension i).

In einer Ausführungsform des erfindungsgemäßen Verfahrens beträgt der Anteil des Formaldehyds im polaren Lösungsmittel (A) in Schritt i) 1 Gew.-% bis 99 Gew.-%, bevorzugt 10 Gew.-% bis 50 Gew.-% besonders bevorzugt von 15 Gew.-%-40 Gew.-%.

In einer Ausführungsform des erfindungsgemäßen Verfahrens ist das Formaldehyd-haltige Gemisch (A) die Formaldehyd-haltige Lösung i).

Gemäß der gängigen fachlichen Definition ist unter einer Lösung ein homogenes Gemisch aus mindestens zwei Stoffen zu verstehen, bei der ein fester, flüssiger oder gasförmiger Stoff (Solvat wie beispielsweise polymeres Formaldehyd) in einem meist flüssigen Lösungsmittel (Solvens wie beispielsweise Lösungsmittel (A) und/oder Lösungsmittel (C)) homogen verteilt vorliegt.

In einer Ausführungsform des erfindungsgemäßen Verfahrens beträgt der Anteil des Formaldehyds in der Formaldehyd-haltigen Lösung i) 1 Gew.-% bis 50 Gew.-% bevorzugt 10 Gew.-% bis 45 Gew.-%, besonders bevorzugt 10 Gew.-% bis 40 Gew.-%.

In einer bevorzugten Ausführungsform des erfindungsgemäßen Verfahrens wird die Formaldehyd-haltige Lösung i) durch Lösen von 1 Gew.-% bis 40 Gew.-% bevorzugt 10 Gew.-% bis 35 Gew.-% des polymeren Paraformaldehyds in Wasser als polares Lösungsmittel (A) hergestellt.

In einer alternativen Ausführungsform des erfindungsgemäßen Verfahrens wird als die Formaldehyd-haltige Lösung i) eine Formalinlösung verwendet. Bevorzugt ist die Formalinlösung eine wässrige, Methanol-haltige Formalinlösung mit einem Formaldehydanteil 1 Gew.-% bis 50 Gew.-% bevorzugt 10 Gew.-% bis 45 Gew.-%, besonders bevorzugt 10 Gew.-% bis 40 Gew.-% und einem Methanolanteil von weniger als 5 Gew.-%, bevorzugt weniger als 3 Gew.-% und besonders bevorzugt von 1,5 Gew.-%.

In einer alternativen Ausführungsform des erfindungsgemäßen Verfahrens ist das Formaldehyd-haltige Gemisch (A) die Formaldehyd-haltige Suspension i).

Unter einer Suspension ist gemäß des allgemeinen Fachwissens ein heterogenes Stoffgemisch aus einer Flüssigkeit wie beispielsweise Lösungsmittel (A) und/oder Lösungsmittel (C) und darin verteilten festen Partikeln wie beispielsweise polymeren Formaldehyd zu verstehen, wobei Phasengrenzen zwischen den dispergierten Partikeln und der Flüssigkeit resultieren.

In einer alternativen Ausführungsform des erfindungsgemäßen Verfahrens beträgt der Anteil des Formaldehyds in der Formaldehyd-haltigen Suspension i) 10 Gew.-% bis 99 Gew.-%, bevorzugt 50 Gew.-% bis 95 Gew.-% besonders bevorzugt von 60 Gew.-%-90 Gew.-%.

In einer Ausführungsform des erfindungsgemäßen Verfahrens ist das Formaldehyd-haltige Gemisch (A) erhältlich ist durch Mischen von polymerem Formaldehyd mit dem polaren Lösungsmittel (A) und optional dem polaren Lösungsmittel (C).

In einer Ausführungsform des erfindungsgemäßen Verfahrens wird polymeres Formaldehyd verwendet wobei das polymere Formaldehyd m terminale Hydroxylgruppe aufweist und m eine natürliche Zahl von zwei oder mehr bevorzugt von 2 oder 3 ist.

Als polymeres Formaldehyd für das erfindungsgemäße Verfahren eignen sich grundsätzlich solche oligomeren und polymeren Formen des Formaldehyds, welche wenigstens eine bevorzugt mindestens zwei terminale Hydroxylgruppen zur Reaktion mit den OH-reaktiven Gruppen einer OH-reaktiven Verbindung aufweisen. Unter dem Begriff "terminale Hydroxylgruppe" wird erfindungsgemäß insbesondere eine terminale Halbacetal-Funktionalität verstanden, welche sich als Strukturmerkmal über die Polymerisation des Formaldehyds ergibt. Beispielsweise können die Starterverbindungen Oligomere und Polymere des Formaldehyds der allgemeinen Formel $HO-(CH_2O)_n-H$ sein, wobei n für eine natürliche Zahl $\geq 2$ steht und wobei polymeres Formaldehyd typischerweise n > 8 Wiederholungseinheiten aufweist.

Für das erfindungsgemäße Verfahren geeignetes polymeres Formaldehyd weist im Allgemeinen Molmassen von 62 bis 30000 g/mol, bevorzugt von 62 bis 12000 g/mol, besonders bevorzugt von 242 bis 6000 g/mol und ganz besonders bevorzugt von 242 bis 3000 g/mol auf und umfasst von 2 bis 1000, bevorzugt von 2 bis 400, besonders bevorzugt von 8 bis 200 und ganz besonders bevorzugt von 8 bis 100 Oxymethylen-Wiederholungseinheiten. Die im erfindungsgemäßen Verfahren eingesetzte polymere Formaldehyd hat typischerweise eine Funktionalität (F), d.h. m terminale Hydroxylgruppe aufweist, von 2 bis 3, in bestimmten Fällen können diese aber auch höherfunktionell sein, also eine Funktionalität > 3 besitzen. Bevorzugt wird im erfindungsgemäßen Verfahren offenkettiges polymeres Formaldehyd mit terminalen Hydroxylgruppen eingesetzt, welches eine Funktionalität von 2 bis 10, bevorzugt von 2 bis 5, besonders bevorzugt von 2 bis 3 hat. Ganz besonders bevorzugt wird im erfindungsgemäßen Verfahren lineares polymeres Formaldehyd eingesetzt, welches eine Funktionalität von 2 mit 2 terminalen Hydroxylgruppen aufweist. Die Funktionalität F entspricht der Anzahl an terminalen OH-Endgruppen (terminalen Hydroxylgruppen m) pro Molekül.

Die Herstellung von polymeren Formaldehyd, welches für das erfindungsgemäße Verfahren eingesetzt wird, kann nach bekannten Verfahren erfolgen (vgl. z.B. M. Haubs *et. al.,* 2012, Polyoxymethylenes, Ullmann's Encyclopedia of Industrial Chemistry; G. Reus *et. al.,* 2012, Formaldehyde, *ibid*). Das polymere Formaldehyd kann im erfindungsgemäßen Verfahren grundsätzlich auch in Form eines Copolymers eingesetzt werden, wobei als Comonomere neben Formaldehyd beispielsweise 1,4-Dioxan, oder 1,3-Dioxolan einpolymerisiert sind. Weitere geeignete Formaldehyd-Copolymere für das erfindungsgemäße Verfahren sind Copolymere des Formaldehyds sowie des Trioxans mit cyclischen und/oder linearen Formalen, wie beispielsweise Butandiolformal, Epoxiden oder cyclischen Carbonaten (vgl. z.B. EP 3 080 177 B1). Es ist ebenfalls denkbar, dass als Comonomere höhere homologe Aldehyde, wie beispielweise Acetaldehyd, Propionaldehyd, etc., in das Formaldehyd-Polymer eingebaut sind. Ebenfalls ist es denkbar, dass erfindungsgemäße polymere Formaldehyd wiederum ausgehend von H-funktionellen Starterverbindungen hergestellt wird, insbesondere lassen sich hierbei durch den Einsatz von mehrwertigen Starterverbindungen polymeres Formaldehyd mit einer Hydroxy-Endgruppen-Funktionalität F > 2 erhalten (vgl. z.B. WO 1981001712 A1, Bull. Chem. Soc. J., 1994, 67, 2560-2566, US 3436375, JP 03263454, JP 2928823).

Bekanntlich polymerisiert Formaldehyd bereits durch die Gegenwart geringer Wasserspuren. In wässriger Lösung bildet sich daher in Abhängigkeit von Konzentration und Temperatur der Lösung ein Gemisch von Oligomeren und Polymeren unterschiedlicher Kettenlängen, welche mit molekularem Formaldehyd und Formaldehyd-Hydrat im Gleichgewicht stehen. Sogenanntes Paraformaldehyd fällt hierbei als ein weißer, schlecht-löslicher Feststoff, aus der Lösung aus und stellt in der Regel ein Gemisch linearer Formaldehyd-Polymere mit 8 bis 100 Oxymethylen-Wiederholungseinheiten dar.

Ein Vorteil des erfindungsgemäßen Verfahrens liegt insbesondere darin, dass entweder wässrige Formalinlösung oder polymeres Formaldehyd, sogenanntes Paraformaldehyd, welche beide kommerziell großtonnagig und kostengünstig erhältlich sind und eine vorteilhafte $CO_2$-Bilanz aufweisen, direkt eingesetzt werden können.

Eine Polyoxymethylen-Gruppe (Polyoxymethylen-Block (POM)) im Sinne der Erfindung bezeichnet eine polymere Struktureinheit $-(CH_2-O-)_x$ wobei x für eine ganze Zahl $\geq 2$ steht, die mindestens eine an zwei Sauerstoffatome gebundene $CH_2$-Gruppe enthält, welche über mindestens eines der Sauerstoffatome mit weiteren Methylengruppen oder anderen polymeren Strukturen verbunden ist. Bevorzugt enthalten Polyoxymethylen-Blöcke $-(CH_2-O-)_x$ durchschnittlich x $\geq 3$ bis x $\leq 25$, mehr bevorzugt durchschnittlich x $\geq 4$ bis x $\leq 18$ und besonders bevorzugt durchschnittlich x $\geq 5$ bis x $\leq 12$ Oxymethylen-Einheiten.

Im Sinne der Erfindung werden unter einem Polyoxymethylen-Block auch solche Blöcke verstanden, welche geringe Anteile weiterer Wiederholungseinheiten aus monomeren und/oder oligomeren Einheiten ungleich der Oxymethylen-Wiederholungseinheiten , wobei der Anteil dieser Einheiten im Allgemeinen weniger als 25 mol% bevorzugt weniger als 10 mol%, bevorzugt weniger als 5 mol% bezogen auf die Gesamtmenge der im Block enthaltenen Monomereneinheiten beträgt. Diese Wiederholungseinheiten aus monomeren und/oder oligomeren Einheiten ungleich der Oxymethylen-Wiederholungseinheiten sind hierbei gemäß des allgemeinen Fachwissens (vgl. G. Reus et. al., 2012, Formaldehyde, Ullmann's Encyclopedia of Industrial Chemistry; 2012) beispielsweise freies oder im Polyoxymethylen-Block gebundenes Wasser.

In einer bevorzugten Ausführungsform enthält der Polyoxymethylen-Block keine weiteren Anteile weiterer Wiederholungseinheiten aus monomeren und/oder oligomeren Einheiten ungleich der Oxymethylen-Wiederholungseinheiten.

In einer Ausführungsform des erfindungsgemäßen Verfahrens weist das polare Lösungsmittel (A) eine Siedetemperatur von <300 °C bevorzugt <250, besonders bevorzugt <200 °C und ganz besonders bevorzugt <150 °C bei 1 bara auf.

In einer bevorzugten Ausführungsform des erfindungsgemäßen Verfahrens ist das polare Lösungsmittel (A) eine oder mehrere Verbindungen und wird ausgewählt wird aus der Gruppe bestehend aus Wasser, Glycerin, Ethylenglycol, Diethylenglycol, Propylenglycol, Dipropylenglycol, Butandiol, bevorzugt Wasser, Ethylenglycol, Diethylenglycol, Propylenglycol, Dipropylenglycol, und besonders bevorzugt Wasser.

In einer besonders bevorzugten Ausführungsform des erfindungsgemäßen Verfahrens ist das polare Lösungsmittel (A) Wasser.

Im erfindungsgemäßen Verfahren enthält das unpolare Lösungsmittel (B) keine OH-reaktiven funktionellen Gruppen sowie reagiert es nicht selbst mit OH-reaktiven Verbindungen.Erfindungsgemäß sind Nitromethan, Acetonitril, Methylacetat, 1,3-Dioxolan, Ameisensäureethylester, Dimethoxymethan, Tetrahydrofuran, Ethylacetat, 1,4-Dioxan, Methylpropanoat, Ethylenglycol Dimethylether, Diethylenglycol Dimethylether, 2-Butanon keine unpolaren Lösungsmittel.

In einer Ausführungsform des erfindungsgemäßen Verfahrens weist das unpolare Lösungsmittel (B) eine Siedetemperatur von von <300 °C bevorzugt <250, besonders bevorzugt <200 °C und ganz besonders bevorzugt <150 °C bei 1 bara auf.

In einer Ausführungsform des erfindungsgemäßen Verfahrens bildet das unpolare Lösungsmittel (B) ein Azeotrop mit dem Lösungsmittel (A), bevorzugt mit Wasser, unter den erfindungsgemäßen Prozessbedingungen in Schritt ii) und iii).

In einer Ausführungsform des erfindungsgemäßen Verfahrens ist das unpolare Lösungsmittel (B) eine oder mehrere Verbindung(en) und wird ausgewählt aus der Gruppe bestehend aus Trichloromethan, Trichloroethen, 1,2-Dichloroethan, 1-Bromopropan, 1-Bromobutan, 1-Bromo-2-methylpropan, 1-Chloro-2-methylpropan, 1,2-Dichloropropan, Tetrachlorkohlenstoff, Dichloromethan, Isopropylacetat, Propylacetat, Butylacetat, Isobutylacetat, Ameisensäurepropylester, Ameisensäurebutylester, Ameisensäureisobutylester, Propionsäurepropylester, Propionsäureethylester, Isopentylacetat, Propionsäurebutylester, Buttersäurebutylester, Butylethylether, Dibutylether, Diethylether, Benzol, Toluol, Styrol, m-Xylol, p-Xylol, o-Xylol, Ethylbenzol, Isopropenylbenzol, Isopropylbenzol, Cyclohexen, n, iso-Hexen, n, iso-Hepten, 2-Methyl-1,3-butadien, Methylencyclobutan, 2-Methyl-2-buten, Hexan, Cyclohexan, Heptan, Methylcyclohexan, Octan, 2,2,4-Trimethylpentan, Nonan, Decan, Petrolether, bevorzugt Trichloromethan, Trichloroethen, 1,2-Dichloroethan, 1-Bromopropan, 1-Bromobutan, 1-Bromo-2-methylpropan, 1-Chloro-2-methylpropan, 1,2-Dichloropropan, Tetrachlorkohlenstoff, Dichloromethan, Butylethylether, Dibutylether, Diethylether, Benzol, Toluol, Styrol, m-Xylol, p-Xylol, o-Xylol, Ethylbenzol, Isopropenylbenzol, Isopropylbenzol, Cyclohexen, n, iso-Hexen, n, iso-Hepten, 2-Methyl-1,3-butadien, Methylencyclobutan, 2-Methyl-2-buten, Hexan, Cyclohexan, Heptan, Methylcyclohexan, Octan, 2,2,4-Trimethylpentan, Nonan, Decan, Petrolether besonders bevorzugt Benzol, Toluol, m-Xylol, p-Xylol, o-Xylol, Hexan, Cyclohexan, Heptan, Methylcyclohexan und ganz besonders bevorzugt p-Xylol, Cyclohexan, Methylcyclohexan und Toluol.

Im erfindungsgemäßen Verfahren enthält das polare Lösungsmittel (C) keine OH-reaktiven funktionellen Gruppen sowie reagiert es nicht selbst mit OH-reaktiven Verbindungen.

In einer Ausführungsform des erfindungsgemäßen Verfahrens bildet das polare Lösungsmittel (C) ein Azeotrop mit Lösungsmittel (A), bevorzugt mit Wasser, unter Prozessbedingungen in Schritt i).

In einer Ausführungsform des erfindungsgemäßen Verfahrens ist das polare Lösungsmittel (C) eine oder mehrere Verbindungen und wird ausgewählt aus der Gruppe bestehend aus Nitromethan, Acetonitril, Methylacetat, 1,3-Dioxolan, Ameisensäureethylester, Dimethoxymethan, Tetrahydrofuran, Ethylacetat, 1,4-Dioxan, Methylpropanoat, Ethylenglycol Dimethylether, Diethylenglycol Dimethylether, 2-Butanon, bevorzugt Nitromethan, Ethylacetat, Methylpropanoat, Ameisensäureethylester besonders bevorzugt Ethylacetat.

In einer Ausführungsform des erfindungsgemäßen Verfahrens umfasst Schritt i) folgende Schritte:

i-1) Bereitstellen der Formaldehyd-haltigen Lösung i) im Lösungsmittel (A) bevorzugt Wasser

i-2) Optional Zugabe eines polaren Lösungsmittels (C) zu der Formaldehyd-haltigen Lösung i)

i-3) Reduktion des Lösungsmittels (A) und optional des Lösungsmittels (C) unter Bildung einer Formaldehyd-haltigen Suspension i-3).

In einer Ausführungsform des erfindungsgemäßen Verfahrens beträgt das volumetrische Verhältnis des in Schritt i-1) zugegebenen polaren Lösungsmittels (A) zu dem in Schritt i-2) zugegebenen polaren Lösungsmittels (C) von 0,02: 1 bis 50:1 bevorzugt von 0,02: 1 bis 10:1.

In einer Ausführungsform des erfindungsgemäßen Verfahrens erfolgt die Reduktion des Lösungsmittels (A) und optional des Lösungsmittels (C) in Schritt i-3) bei einer Temperatur von 0 °C bis 80 °C, bevorzugt von 30 °C bis 60 °C und bei einem Druck von 0.01 mbara bis 5000 mbara, bevorzugt von 0.1 mbara bis 2000 mbara besonders bevorzugt von 1 mbara bis 1000 mbara und ganz besonders bevorzugt von 1 mbara bis 500 mbara und für 15 min bis 40 h bevorzugt 60 min bis 30 h besonders bevorzugt 120 min bis 20 h.

In einer bevorzugten Ausführungsform des erfindungsgemäßen Verfahrens umfasst Schritt i) weiterhin folgende Schritte:

i-4) Zugabe eines polaren Lösungsmittels (C) zu der Formaldehyd-haltigen Suspension i-3) unter Bildung eines Formaldehyd-haltigen Gemisches i-4),

i-5) Reduktion des Lösungsmittels (A) und optional des Lösungsmittels (C) aus dem Formaldehyd-haltigen Gemisch i-4) unter Bildung einer Formaldehyd-haltigen Suspension i-5).

In einer Ausführungsform des erfindungsgemäßen Verfahrens erfolgt die Reduktion des Lösungsmittels (A) und des Lösungsmittels (C) in Schritt i-3) und Schritt i-5) bei einer Temperatur von 0 °C bis 80 °C, bevorzugt von 30 °C bis 60 °C und bei einem Druck von 0.01°mbara bis 5000°mbara, bevorzugt von 0.1°mbara bis 2000°mbara besonders bevorzugt von 1 mbara bis 1000 mbara und ganz besonders bevorzugt von 1 mbara bis 500 mbara und für 15 min bis 40 h bevorzugt 60 min bis 30 h besonders bevorzugt 120 min bis 20 h.

In Schritt ii) wird das unpolare Lösungsmittel (B) zur Formaldehyd-haltigen Lösung i) oder Formaldehyd-haltigen Suspension i) unter Bildung einer Mischung ii) zugegeben, wobei die Zugabe kontinuierlich oder diskontinuierlich erfolgen kann. Hierbei ist unter einer kontinuierlichen Zugabe ein Volumenstrom des Lösungsmittels (B) in Schritt ii) von > 0 mL/min zu verstehen, wobei der Volumenstrom konstant ist oder variiert werden kann. Unter einer diskontinuierlichen Zugabe sind hingegen auch zwischenzeitliche Volumenströme V(2) von 0 mL/min zwischen zwei zeitlich aufeinander folgende Volumenströme V(1) und V(3) mit > 0 mL/min in Schritt ii) zu verstehen. Eine derartige Ausführungsform für die diskontinuierliche Zugabe stellt die stufenweise Zugabe des Lösungsmittels (B) dar.

In einer Ausführungsform des erfindungsgemäßen Verfahrens beträgt das volumetrische Verhältnis des in Schritt ii) zugegebenen unpolaren Lösungsmittels (B) zu dem in Schritt i) zugegebenen polaren Lösungsmittel (A) und Lösungsmittels (C) von 500:1 bis 0,1:1 bevorzugt von 200:1 bis 0,5:1.

In Schritt iii) wird das Lösungsmittel (A), das Lösungsmittel (B) und optional das Lösungsmittel (C) aus der Mischung ii) unter Bildung eines Oxymethylengruppen-haltigen Monols oder Polyols bevorzugt Polyols bei einer Temperatur von 0 °C bis 80 °C, bevorzugt von 30 °C bis 60 °C und ein Druck von 0.01°mbara bis 5000°mbara, bevorzugt von 0.1°mbara bis 2000°mbara besonders bevorzugt von 1 mbara bis 1000 mbara und ganz besonders bevorzugt von 1 mbara bis 500 mbara entfernt, wobei die Entfernung kontinuierlich oder diskontinuierlich bevorzugt kontinuierlich erfolgen kann.

Hierbei entspricht die Temperatur zur Entfernung des Lösungsmittels (A), des Lösungsmittels (B) und optional des Lösungsmittels (C) in Schritt iii) der Temperatur der Mischung ii) und der Druck des Mischung ii) enthaltenden Apparates in Schritt iii).

In einer Ausführungsform des erfindungsgemäßen Verfahrens wird in Schritt iv) das Lösungsmittelgemisch umfassend das polare Lösungsmittel (A), das unpolare Lösungsmittel (B) und optional das polare Lösungsmittel (C) aus Schritt iii) aufgetrennt, wobei eine erste Fraktion umfassend das polare Lösungsmittel (A) und/oder das polare Lösungsmittel (C) sowie eine zweite Fraktion umfassend das unpolare Lösungsmittel (B) resultiert.

Das Auftrennen der Lösungsmittel kann hierbei über die für den Fachmann bekannte destillative und/oder extraktive Methoden erfolgen, wobei für das erfindungsgemäße Verfahren im Speziellen Dichte und Polaritätsunterschiede der ersten Fraktion umfassend das polare Lösungsmittel (A) und/oder das polare Lösungsmittel (C) bevorzugt bestehend aus dem polaren Lösungsmittel (A) und/oder das polare Lösungsmittel (C) und zweiten Fraktion umfassend das unpolare Lösungsmittel (B) bevorzugt bestehend aus dem unpolaren Lösungsmittel (B) genutzt werden.

In einer Ausführungsform des erfindungsgemäßen Verfahrens wird in Schritt v) die zweite Fraktion umfassend das umfassend das Lösungsmittel (B) bestehend aus dem unpolaren Lösungsmittel (B) zurückgeführt und wird in Schritt ii) zur Formaldehyd-haltigen Lösung i) oder Formaldehyd-haltigen Suspension i) unter Bildung einer Mischung ii) zugegeben. Durch diese Kreislauffahrweise bestehend aus den Schritten ii) bis v) kann eine signifikante Menge an dem unpolaren Lösungsmittel (B) eingespart werden.

In einer weiteren Ausführungsform kann in Schritt v) auch die erste Fraktion umfassend das polare Lösungsmittel (A) und/oder das polare Lösungsmittel (C) zurückgeführt und in Schritt i) speziell Schritt i-1) für das polare Lösungsmittel (A) und in Schritt i-3) das polare Lösungsmittel (C) wieder zugegeben werden. Durch diese Kreislauffahrweise bestehend aus den Schritten i) bis v) kann eine signifikante Menge an dem polaren Lösungsmittel (A) und/oder dem polaren Lösungsmittel (C) eingespart werden.

Die Rückführung des polaren Lösungmittels (A) und/oder des unpolaren Lösungsmittels (B) und optional des polaren Lösungsmittels (C) in Schritt v) kann hierbei kontinuierlich oder diskontinuierlich (stufenweise) erfolgen.

In einer ersten Ausführung betrifft die Erfindung ein Verfahren zur Herstellung eines Monols oder Polyols umfassend einen Polyoxymethylen-Block bevorzugt eines Polyols umfassend einen Polyoxymethylen-Block, wobei das Verfahren folgende Schritte umfasst:

i) Bereitstellen eines Formaldehyd-haltigen Gemisches (A) enthaltend Formaldehyd in einem polaren Lösungsmittel (A) und optional in einem polaren Lösungsmittel (C);

ii) Zugabe eines unpolaren Lösungsmittels (B) zur Formaldehyd-haltigen Lösung i) oder einer Formaldehyd-haltigen Suspension i) unter Bildung einer Mischung ii);

iii) Entfernen des Lösungsmittels (A), des Lösungsmittels (B) und optional des Lösungsmittels (C) aus der Mischung ii) unter Bildung des Monols oder Polyols umfassend einen Polyoxymethylen-Block,

wobei die Entfernung des Lösungsmittels (A), des Lösungsmittels (B) und optional des Lösungsmittels (C) in Schritt iii) bei einer Temperatur von 0 °C bis 80 °C, bevorzugt von 30 °C bis 60 °C und ein Druck von 0.01°mbara bis 5000°mbara, bevorzugt von 0.1°mbara bis 2000°mbara besonders bevorzugt von 1 mbara bis 1000 mbara und ganz besonders bevorzugt von 1 mbara bis 500 mbara erfolgt;wobei das Lösungsmittel (A) ungleich dem Lösungsmittel (B) ist; und wobei das das Lösungsmittel (B) und optional das Lösungsmittel (C) keine OH-reaktiven funktionellen Gruppen enthalten sowie selbst nicht mit OH-reaktiven Verbindungen reagiert.

In einer zweiten Ausführung betrifft die Erfindung ein Verfahren gemäß der ersten Ausführung, wobei das Formaldehyd-haltige Gemisch (A) erhältlich ist durch Mischen von polymerem Formaldehyd mit dem polaren Lösungsmittel (A) und optional dem polaren Lösungsmittel (C).

In einer dritten Ausführung betrifft die Erfindung ein Verfahren gemäß der ersten oder zweiten Ausführungsform, wobei das polare Lösungsmittel (A) eine oder mehrere Verbindungen ist und ausgewählt wird aus der Gruppe bestehend aus Wasser, Glycerin, Ethylenglycol, Diethylenglycol, Propylenglycol, Dipropylenglycol, Butandiol, bevorzugt Wasser, Ethylenglycol, Diethylenglycol, Propylenglycol, Dipropylenglycol, und besonders bevorzugt Wasser.

In einer vierten Ausführung betrifft die Erfindung ein Verfahren gemäß einer der ersten bis dritten Ausführungsform, wobei das unpolare Lösungsmittel (B) eine oder mehrere Verbindung(en) ist und ausgewählt wird aus der Gruppe bestehend aus Trichloromethan, Trichloroethen, 1,2-Dichloroethan, 1-Bromopropan, 1-Bromobutan, 1-Bromo-2-methylpropan, 1-Chloro-2-methylpropan, 1,2-Dichloropropan, Tetrachlorkohlenstoff, Dichloromethan, Isopropylacetat, Propylacetat, Butylacetat, Isobutylacetat, Ameisensäurepropylester, Ameisensäurebutylester, Ameisensäureisobutylester, Propionsäurepropylester, Propionsäureethylester, Isopentylacetat, Propionsäurebutylester, Buttersäurebutylester, Butylethylether, Dibutylether, Diethylether, Benzol, Toluol, Styrol, m-Xylol, p-Xylol, o-Xylol, Ethylbenzol, Isopropenylbenzol, Isopropylbenzol, Cyclohexen, n, iso-Hexen, n, iso-Hepten, 2-Methyl-1,3-butadien, Methylencyclobutan, 2-Methyl-2-buten, Hexan, Cyclohexan, Heptan, Methylcyclohexan, Octan, 2,2,4-Trimethylpentan, Nonan, Decan, Petrolether, bevorzugt Trichloromethan, Trichloroethen, 1,2-Dichloroethan, 1-Bromopropan, 1-Bromobutan, 1-Bromo-2-methylpropan, 1-Chloro-2-methylpropan, 1,2-Dichloropropan, Tetrachlorkohlenstoff, Dichloromethan, Butylethylether, Dibutylether, Diethylether, Benzol, Toluol, Styrol, m-Xylol, p-Xylol, o-Xylol, Ethylbenzol, Isopropenylbenzol, Isopropylbenzol, Cyclohexen, n, iso-Hexen, n, iso-Hepten, 2-Methyl-1,3-butadien, Methylencyclobutan, 2-Methyl-2-buten, Hexan, Cyclohexan, Heptan, Methylcyclohexan, Octan, 2,2,4-Trimethylpentan, Nonan, Decan, Petrolether besonders bevorzugt Benzol, Toluol, m-Xylol, p-Xylol, o-Xylol, Hexan, Cyclohexan, Heptan, Methylcyclohexan und ganz besonders bevorzugt p-Xylol, Cyclohexan, Methylcyclohexan und Toluol.

In einer fünften Ausführung betrifft die Erfindung ein Verfahren gemäß einer der ersten bis vierten Ausführungsform, wobei das unpolare Lösungsmittel (B) ein Azeotrop mit dem Lösungsmittel (A), bevorzugt mit Wasser, unter den erfindungsgemäßen Prozessbedingungen in Schritt ii) und iii) bildet.

In einer sechsten Ausführung betrifft die Erfindung ein Verfahren gemäß einer der ersten bis fünften Ausführungsform, wobei das Formaldehyd-haltige Gemisch (A) eine Formaldehyd-haltige Lösung i) oder eine Formaldehyd-haltige Suspension i) bevorzugt eine Formaldehyd-haltige Suspension i) ist.

In einer siebten Ausführung betrifft die Erfindung ein Verfahren gemäß einer der ersten bis sechsten Ausführungsform, wobei der Anteil des Formaldehyds im polaren Lösungsmittel (A) in Schritt i) 1 Gew.-% bis 99 Gew.-%, bevorzugt 10 Gew.-% bis 50 Gew.-% besonders bevorzugt von 15 Gew.-%-40 Gew.-% beträgt.

In einer achten Ausführung betrifft die Erfindung ein Verfahren gemäß einer der ersten bis siebten Ausführungsform, wobei das Formaldehyd-haltige Gemisch (A) die Formaldehyd-haltige Lösung i) ist und durch Lösen von polymeren Paraformaldehyd in dem polaren Lösungsmittel (A) hergestellt wird.

In einer neunten Ausführung betrifft die Erfindung ein Verfahren gemäß einer der ersten bis achten Ausführungsform, wobei das Formaldehyd-haltige Gemisch (A) die Formaldehyd-haltige Lösung i) ist.

In einer zehnten Ausführung betrifft die Erfindung ein Verfahren gemäß der neunten Ausführungsform, wobei der Anteil des Formaldehyds in der Formaldehyd-haltigen Lösung i) 1 Gew.-% bis 50 Gew.-% bevorzugt 10 Gew.-% bis 45 Gew.-%, besonders bevorzugt 10 Gew.-% bis 40 Gew.-% beträgt.

In einer elften Ausführung betrifft die Erfindung ein Verfahren gemäß der neunten oder zehnten Ausführungsform, wobei die Formaldehyd-haltige Lösung i) durch Lösen von 1 Gew.-% bis 40 Gew.-% bevorzugt 10 Gew.-% bis 35 Gew.-% des polymeren Paraformaldehyds in Wasser als polares Lösungsmittel (A) hergestellt.

In einer zwölften Ausführung betrifft die Erfindung ein Verfahren gemäß der ersten bis achten Ausführungsform, wobei das Formaldehyd-haltige Gemisch (A) die Formaldehyd-haltige Suspension i) ist.

In einer dreizehnten Ausführung betrifft die Erfindung ein Verfahren gemäß der zwölften Ausführungsform, wobei der Anteil des Formaldehyds in der Formaldehyd-haltigen Suspension i) 10 Gew.-% bis 99 Gew.-%, bevorzugt 50 Gew.-% bis 95 Gew.-% besonders bevorzugt von 60 Gew.-%-90 Gew.-%. beträgt

In einer vierzehnten Ausführung betrifft die Erfindung ein Verfahren gemäß einer der achten bis dreizehnten Ausführungsform, wobei polymeres Formaldehyd verwendet und das polymere Formaldehyd m terminale Hydroxylgruppe aufweist und m eine natürliche Zahl von zwei oder mehr bevorzugt von 2 oder 3 ist.

In einer fünfzehnten Ausführung betrifft die Erfindung ein Verfahren gemäß einer der ersten bis vierzehnten Ausführungsform, wobei Schritt i) folgende Schritte umfasst:

i-1) Bereitstellen einer Formaldehyd-haltigen Lösung i) im Lösungsmittel (A) bevorzugt Wasser

i-2) Optional Zugabe eines polaren Lösungsmittels (C) zu der Formaldehyd-haltigen Lösung i)

i-3) Reduktion des Lösungsmittels (A) und optional des Lösungsmittels (C) unter Bildung einer Formaldehyd-haltigen Suspension i-3).

In einer sechzehnten Ausführung betrifft die Erfindung ein Verfahren gemäß der fünfzehnten Ausführungsform, wobei das volumetrische Verhältnis des in Schritt i-1) zugegebenen polaren Lösungsmittels (A) zu dem in Schritt i-2) zugegebenen polaren Lösungsmittels (C) von 0,02:1 bis 50:1 bevorzugt von 0,02: 1 bis 10:1 beträgt.

In einer siebzehnten Ausführung betrifft die Erfindung ein Verfahren gemäß der fünfzehnten oder sechzehnten Ausführungsform, wobei die Reduktion des Lösungsmittels (A) und optional des Lösungsmittels (C) in Schritt i-3) bei einer Temperatur von 0 °C bis 80 °C, bevorzugt von 30 °C bis 60 °C und bei einem Druck von 0.01°mbara bis 5000°mbara, bevorzugt von 0.1°mbara bis 2000°mbara besonders bevorzugt von 1 mbara bis 1000 mbara und ganz besonders bevorzugt von 1 mbara bis 500 mbara und für 15 min bis 40 h bevorzugt 60 min bis 30 h besonders bevorzugt 120 min bis 20 h erfolgt.

In einer achtzehnten Ausführung betrifft die Erfindung ein Verfahren gemäß einer der fünfzehnten bis siebzehnten Ausführungsform, wobei Schritt i) weiterhin folgende Schritte umfasst:

i-4) Zugabe eines polaren Lösungsmittels (C) zu der Formaldehyd-haltigen Suspension i-3) unter Bildung eines Formaldehyd-haltigen Gemisches i-4),

i-5) Reduktion des Lösungsmittels (A) und optional des Lösungsmittels (C) aus dem Formaldehyd-haltigen Gemisch i-4) unter Bildung einer Formaldehyd-haltigen Suspension i-5),

In einer neunzehnten Ausführung betrifft die Erfindung ein Verfahren gemäß einer der ersten bis achtzehnten Ausführungsform, wobei das volumetrische Verhältnis des in Schritt ii) zugegebenen unpolaren Lösungsmittels (B) zu dem in Schritt i) zugegebenen polaren Lösungsmittel (A) und Lösungsmittels (C) von 500:1 bis 0,1:1 bevorzugt von 200:1 bis 0,5:1.

In einer zwanzigsten Ausführung betrifft die Erfindung ein Verfahren gemäß einer der ersten bis neunzehnten Ausführungsform, wobei das polare Lösungsmittel (C) eine oder mehrere Verbindungen ist und ausgewählt wird aus der Gruppe bestehend aus Nitromethane, Acetonitrile, Methylacetat, 1,3-Dioxolan, Ameisensäureethylester, Dimethoxymethan, Tetrahydrofuran, Ethylacetat, 1,4-Dioxan, Propansäuremethylester, Ethylenglycol Dimethylether, Diethylenglycol Dimethylether, 2-Butanon, bevorzugt Nitromethan, Ethylacetat, Propansäuremethylester, und Ameisensäureethylester besonders bevorzugt Ethylacetat.

In einer einundzwanzigsten Ausführung betrifft die Erfindung ein Verfahren gemäß einer der ersten bis zwanzigsten Ausführungsform, wobei das Verfahren noch folgende Schritte umfasst:

iv) Auftrennen des Lösungsmittelgemisches umfassend das polare Lösungsmittel (A), das unpolare Lösungsmittel (B) und optional das polare Lösungsmittel (C) aus Schritt iii)

v) Zurückführen des unpolaren Lösungsmittels (B) in Schritt ii)

**Beispiele**

**Eingesetzte Verbindungen:**

Granuform (polymeres Formaldehyd): (Granuform® M oder Granuform® 96, (Formaldehydgehalt laut Hersteller jeweils 94.5 - 96.5 Gew.%), Prefere Paraform GmbH & Co. KG).

Formalin: Formaldehydlösung in Wasser (Formaldehydgehalt laut Hersteller 32.05 Gew.%, Methanolgehalt 1.26 Gew.%, Covestro Deutschland AG)

Essigsäureethylester-1 (> 98%, Julius Hoesch GmbH & Co. KG, keine Vorbehandlung)

Essigsäureethylester-2 (> 99.5%, Sigma-Aldrich, über $CaH_2$ getrocknet, destilliert und über 4 Å Molsieb gelagert)

Cyclohexan (> 99%, Acros Organics, keine Vorbehandlung)

Toluol (> 98%, Julius Hoesch GmbH & Co. KG, keine Vorbehandlung)

p-Xylol (> 99%, Sigma-Aldrich, keine Vorbehandlung)

TDI (Desmodur T 100, Toluol-2,4-diisocyanat, > 99%, Covestro Deutschland AG, keine Vorbehandlung)

n-Pentan (> 99%, Acros Organics, getrocknet über 4 Å Molsieb)

Dibutylzinndilaurat (95%, Sigma-Aldrich, keine Vorbehandlung)

DMSO-d6 (99.80% D, Euriso-Top GmbH, getrocknet über 4 Å Molsieb)

Dimethoxymethan, DMM (99.9%, Sigma-Aldrich Chemie GmbH, über $CaH_2$ getrocknet, destilliert und über 4 Å Molsieb gelagert)

Dioxan (> 99%, Sigma-Aldrich, keine Vorbehandlung)

Benzol (> 99%, Sigma-Aldrich, keine Vorbehandlung)

**Methodenbeschreibung:**

**Aufbau der Azeotroprektifikation:** Ein 250 mL Dreihalskolben wird mit einem KPG-Rührer ausgestattet, und mit einem Dean-Stark Adapter (Wasserabscheider) verschaltet. Die gesamte Apparatur ist Vakuum-dicht und der Dean-Stark Adapter zusätzlich mit einem Kryostat auf 0 °C gekühlt.

**$^1$H-NMR-Spektroskopie:** Die Messungen erfolgten auf einem Bruker Avance III 300 (300 MHz) oder Bruker Avance III 400 (400 MHz); die Kalibrierung der chemischen Verschiebungen erfolgte relativ zum Restprotonensignal (DMSO-d6: $\delta$ [1]H = 2.50 ppm); die Multiplizität der Signale wurde wie folgt angegeben: s = Singulett, m = Multiplett.

**Polyoxymethylengruppengehalt:** Der durchschnittliche Gehalt an Polyoxymethylengruppen n der Polyol umfassend einen Polyoxymethylen-Block wurde mit Hilfe von $^1$H-NMR Spektroskopie über Integration der charakteristischen Protonsignale bestimmt. Die charakteristischen Signale der Hydroxy-Endgruppen (OH) sind im Bereich 6.5-5.7 ppm. Die charakteristischen Signale der Polyoxymethylengruppen ($OCH_2$) sind im Bereich 5.05-4.4 ppm. Nachdem das Integral des OH-Signals auf zwei normiert wurde, lässt sich der Gehalt an Polyoxymethylengruppen n der erfindungsgemäßen Polyole umfassend einen Polyoxymethylen-Block über folgende Formel berechnen:

$$n\text{-} = \frac{\mathrm{Integral}(\mathrm{OCH_2})}{2}$$

**Freier Wassergehalt:** Der Gehalt des physikalisch gebundenen Wassers (freier Wassergehalt) der erfindungsgemäßen Polyole umfassend einen Polyoxymethylen-Block wurde mit Hilfe von $^1$H-NMR Spektroskopie bestimmt. Die Verhältnisse der entsprechenden Signale (OH [$\delta$ $^1$H 6.5-5.7 ppm], $H_2O$ [$\delta$ $^1$H 3.33 ppm]) wurden durch Integration bestimmt und der Wassergehalt wurde über folgende Formel berechnet:

$$Wassergehalt[\%] = \frac{MW_{H_2O}}{(n \times MW_{OCH_2} + MW_{H_2O}) \times \left(\frac{Integral(OH)}{Integral(H_2O)}\right) + MW_{H_2O}} \times 100\%$$

**NCO Präpolymer/Harnstoff Verhältnis:** Die Selektivität der Bildung von NCO Präpolymeren wurde als molares Verhältnis zwischen Produkt (NCO Präpolymer) und Nebenprodukt (Harnstoff) im Produktgemisch ermittelt. Das NCO Präpolymer/Harnstoff Verhältnis wurde mit Hilfe von $^1$H-NMR Spektroskopie über Integration der entsprechenden Signale (NH-Gruppen von Carbamat-Einheiten des Präpolymers [$\delta$ $^1$H 9.89 ppm], NH-Gruppen von Harnstoff [$\delta$ $^1$H 8.72 ppm]) bestimmt.

$$\text{NCO Präpolymer/Harnstoff Verhältnis - } = \frac{\text{Integral}\left(\text{NH}_{\text{Präpolymer}}\right)}{\text{Integral}\left(\text{NH}_{\text{Harnstoff}}\right)}$$

Das Integral der NH-Gruppen des Präpolymers wurde auf 100 normiert.

**Polyol (umfassend einen Polyoxymethylen-Block) Umsatz:** Der Umsatz von Polyol (umfassend einen Polyoxymethylen-Block) in die Reaktion mit TDI wurde mit Hilfe von $^1$H-NMR Spektroskopie bestimmt. Die charakteristischen Signale der Hydroxy-Endgruppen (OH [$\delta$ $^1$H 6.5-5.7 ppm]) wurden hierfür betrachtet. Das Integral der charakteristischen Signale der Polyoxymethylengruppen in direkter Nachbarschaft zur Carbamateinheit (OCH$_2$* [$\delta$ $^1$H 5.34 ppm]) wurde auf vier normiert. Falls keine Signale der Hydroxy-Endgruppen nach der Reaktion mehr beobachtet wurden (der Gesamtintegral des Bereiches 6.5-5.7 ppm war <0.1), wurde der Umsatz von Polyol (umfassend einen Polyoxymethylen-Block) als >95% angenommen.

**Bestimmung der Partikelgrößenverteilung:** Gewobene Maschendrahtsiebe (Rahmendurchmesser 100 mm, Normen/Standards: ISO 3310-1 / ASTM E11) werden mit abnehmender Maschenweite übereinander gestapelt. Das Probenmaterial (pFA) wird auf dem gröbsten Maschendrahtsieb aufgebracht und die Siebe in einer Siebmaschine (Retsch AS 200 basic) fixiert. Es wird für 30 min unter Vibrieren gesiebt und die Massenanteile der einzelnen Fraktionen bestimmt. Die Masse der kleinsten Fraktion, welche alle Siebgrößen (<45 $\mu$m) passiert hat, wird als Differenz der Einwaage und der Summe aller anderen ausgewogen Fraktionen bestimmt.

**Beispiele zum Herstellungsverfahren von Polyole umfassend einen Polyoxymethylen-Block**

Beispiel 1: Azeotroprektifikation einer Formaldehyd-haltigen Suspension i) mit Cyclohexan als unpolares Lösungsmittel (B)

Eine Druckflasche wurde mit Granuform (15.0 g) und VE Wasser (30 mL) befüllt. Durch Erhitzen des Reaktionsgemisches auf 110 °C für ca. 10 Stunden wurde eine klare Formaldehydlösung erhalten (ca. 32 Gew.% Formaldehyd).

Die Formaldehydlösung wurde mit Hilfe eines Rotationsverdampfer auf 87 Gew.% aufkonzentriert: die Temperatur des Bades betrug 40 °C, der Destillationsdruck betrug zwischen 40 bis 60 mbar mit einer Druckreduktion von 5 mbar/45 Min. Die Dauer der Destillation betrug 3 Stunden. Die erhaltene trübe Suspension (ca. 17.3 g) wurde anschließend in den Aufbau der Azeotroprektifikation übertragen und mit Cyclohexan (75 mL) versetzt. Das Wasser der Formaldehydlösung wurde anschließend mittels Azeotroprektifikation bei 40 °C unter vermindertem Druck (240-250 mbar) weiter entfernt. Nach 25 Stunden wurde eine Suspension von dem Polyol umfassend einen Polyoxymethylen-Block in Cyclohexan erhalten. Das Produkt wurde durch Filtration als farbloser Feststoff gewonnen und anschließend getrocknet. Eine Probe des erhaltenem Produktes (Polyol umfassend einen Polyoxymethylen-Block) wurde vollständig in DMSO-d6 gelöst und anschließend mit Hilfe von $^1$H-NMR Spektroskopie charakterisiert:

Polyoxymethylengruppengehalt: n = 9.0.
Freier Wassergehalt: 0.3 Gew.%.

Beispiel 2 (Vergleich): Azeotroprektifikation einer Formaldehyd-haltigen Suspension i) mit Essigsäureethylester als Lösungsmittel (C)

Eine Druckflasche wurde mit Granuform (15.0 g) und VE Wasser (30 mL) befüllt. Durch Erhitzen des Reaktionsgemisches auf 110 °C für ca. 10 Stunden wurde eine klare Formaldehydlösung erhalten (ca. 32 Gew.% Formaldehyd).

Die Formaldehydlösung wurde mit Hilfe eines Rotationsverdampfer auf 87 Gew.% konzentriert: die Temperatur des Bades betrug 40 °C, der Destillationsdruck betrug zwischen 40 bis 60 mbar mit einer Druckreduktion von 5 mbar/45 Min. Die Dauer der Destillation betrug 3 Stunden. Die erhaltene trübe Suspension (ca. 17.3 g) wurde direkt danach in den Aufbau der Azeotroprektifikation übertragen und mit Essigsäureethylester-1 (75 mL) versetzt. Das Wasser der Formaldehydlösung wurde weiter mittels Azeotroprektifikation bei 40 °C unter vermindertem Druck (240-250 mbar) entfernt. Nach 25 Stunden wurde eine Suspension von dem Polyol umfassend einen Polyoxymethylen-Block in Essigsäureethylester erhalten. Das Produkt wurde durch Filtration als farbloser Feststoff gewonnen und anschließend getrocknet. Eine Probe von erhaltenen Polyol umfassend einen Polyoxymethylen-Block wurde vollständig in DMSO-d6 gelöst und anschließend mit Hilfe von $^1$H-NMR Spektroskopie charakterisiert:

Polyoxymethylengruppengehalt: n = 5.5.
Freier Wassergehalt: 5.6 Gew.%.

Beispiel 3: Azeotroprektifikation einer Formaldehyd-haltigen Suspension i) mit *p*-Xylol als unpolares Lösungsmittel (B)

Eine Druckflasche wurde mit Granuform (15.0 g) und VE Wasser (30 mL) befüllt. Durch Erhitzen des Reaktionsgemisches auf 110 °C für ca. 10 Stunden wurde eine klare Formaldehydlösung erhalten (ca. 32 Gew.% Formaldehyd).

Die Formaldehydlösung wurde mit Hilfe eines Rotationsverdampfer auf 87 Gew.% konzentriert: die Temperatur des Bades betrug 40 °C, der Destillationsdruck betrug zwischen 40 bis 60 mbar mit einer Druckreduktion von 5 mbar/45 Min. Die Dauer der Destillation betrug 3 Stunden. Die erhaltene trübe Suspension (ca. 17.3 g) wurde direkt danach in den Aufbau der Azeotroprektifikation übertragen und mit *p*-Xylol (75 mL) versetzt. Das Wasser der Formaldehydlösung wurde mittels Azeotroprektifikation bei 40 °C unter vermindertem Druck (40 mbar) weiter entfernt. Nach 20 Stunden wurde eine Suspension von dem Polyol umfassend einen Polyoxymethylen-Block in *p*-Xylol erhalten. Das Produkt wurde durch Filtration als farbloser Feststoff gewonnen und anschließend getrocknet. Eine Probe von erhaltenen Polyol umfassend einen Polyoxymethylen-Block wurde vollständig in DMSO-d6 gelöst und anschließend mit Hilfe von $^1$H-NMR Spektroskopie charakterisiert:

Polyoxymethylengruppengehalt: n = 9.1.
Freier Wassergehalt: 0.2 Gew.%.

Beispiel 4 (Vergleich): Azeotroprektifikation einer Formaldehyd-haltigen Suspension i) ohne Zusatz eines zusätzlichen unpolaren Lösungsmittels (B)

Eine Druckflasche wurde mit Granuform (15.0 g) und VE Wasser (30 mL) befüllt. Durch Erhitzen des Reaktionsgemisches auf 110 °C für ca. 10 Stunden wurde eine klare Formaldehydlösung erhalten (ca. 32 Gew.% Formaldehyd).

Die Formaldehydlösung wurde mit Hilfe eines Rotationsverdampfer auf 87 Gew.% konzentriert: die Temperatur des Bades betrug 40 °C, der Destillationsdruck betrug zwischen 40 bis 60 mbar mit einer Druckreduktion von 5 mbar/45 Min. Die Dauer der Destillation betrug 3 Stunden. Die erhaltene trübe Suspension (ca. 17.3 g) wurde direkt danach in den Aufbau der Azeotroprektifikation übertragen. Es wurde kein zusätzliches Lösungsmittel hinzugefügt. Das Wasser der Formaldehydlösung wurde mittels Destillation bei 40 °C unter vermindertem Druck (40 mbar) weiter entfernt. Nach 20 Stunden wurde das Polyol umfassend einen Polyoxymethylen-Block Umsatz als farbloser Feststoff entstanden. Eine Probe von dem erhaltenen Produktes wurde vollständig in DMSO-d6 gelöst und anschließend mit Hilfe von $^1$H-NMR Spektroskopie charakterisiert:

Polyoxymethylengruppengehalt: n = 7.9.
Freier Wassergehalt: 6.9 Gew.%.

Beispiel 5: Azeotroprektifikation einer Formaldehyd-haltigen Suspension i) mit Toluol als unpolares Lösungsmittel (B)

Eine Druckflasche wurde mit Granuform (15.0 g) und VE Wasser (30 mL) befüllt. Durch Erhitzen des Reaktionsgemisches auf 110 °C für ca. 10 Stunden wurde eine klare Formaldehydlösung erhalten (ca. 32 Gew.% Formaldehyd).

Die Formaldehydlösung wurde mit Hilfe eines Rotationsverdampfer auf 87 Gew.% konzentriert: die Temperatur des Bades betrug 40 °C, der Destillationsdruck betrug zwischen 40 bis 60 mbar mit einer Druckreduktion von 5 mbar/45 Min. Die Dauer der Destillation betrug 3 Stunden. Die erhaltene trübe Suspension (ca. 17.3 g) wurde direkt danach in den Aufbau der Azeotroprektifikation übertragen und mit Toluol (75 mL) versetzt. Das Wasser der Formaldehydlösung wurde weiter mittels Azeotroprektifikation bei 40 °C unter vermindertem Druck (90 mbar) entfernt. Nach 20 Stunden wurde eine Suspension von dem Polyol umfassend einen Polyoxymethylen-Block in Toluol erhalten. Das Produkt wurde durch Filtration als farbloser Feststoff gewonnen und anschließend getrocknet. Eine Probe vom erhaltenen Produkt wurde vollständig in DMSO-d6 gelöst und anschließend mit Hilfe von $^1$H-NMR Spektroskopie charakterisiert:

Polyoxymethylengruppengehalt: n = 8.8.
Freier Wassergehalt: 0.3 Gew.%.

Beispiel 6: Azeotroprektifikation einer Formaldehyd-haltigen Suspension i) mit Toluol als unpolares Lösungsmittel (B)

Formalin (45.0 g) wurde mit Hilfe eines Rotationsverdampfer auf 87 Gew.% konzentriert: Die Temperatur des Bades betrug 40 °C, der Destillationsdruck betrug zwischen 40 bis 60 mbar mit einer Druckreduktion von 5 mbar/45 Min. Die Dauer der Destillation betrug 3 Stunden. Die erhaltene trübe Suspension (ca. 17.3 g) wurde direkt danach in den Aufbau der Azeotroprektifikation übertragen und mit Toluol (75 mL) versetzt. Das Wasser der Formaldehydlösung wurde weiter mittels Azeotroprektifikation bei 40 °C unter vermindertem Druck (90 mbar) entfernt. Nach 20 Stunden wurde eine Suspension von dem Polyol umfassend einen Polyoxymethylen-Block in Toluol erhalten. Das Produkt wurde durch Filtration als farbloser Feststoff gewonnen und anschließend getrocknet. Eine Probe des erhaltenen Produkts wurde vollständig in DMSO-d6 gelöst und anschließend mit Hilfe von $^1$H-NMR Spektroskopie charakterisiert:

Polyoxymethylengruppengehalt: n = 8.5.
Freier Wassergehalt: 0.4 Gew.%.

Beispiel 7: Azeotroprektifikation einer Formaldehyd-haltigen Lösung i) mit Toluol als unpolares Lösungsmittel (B)

Eine Druckflasche wurde mit Granuform (15.0 g) und VE Wasser (30 mL) befüllt. Durch Erhitzen des Reaktionsgemisches auf 110 °C für ca. 10 Stunden wurde eine klare Formaldehydlösung erhalten (ca. 32 Gew.% Formaldehyd).
Die Formaldehydlösung wurde in den Aufbau der Azeotroprektifikation übertragen und mit Toluol (75 mL) versetzt. Das Wasser der Formaldehydlösung wurde mittels Azeotroprektifikation bei 40 °C unter vermindertem Druck (90 mbar) entfernt. Nach 40 Stunden wurde eine Suspension von dem Polyol umfassend einen Polyoxymethylen-Blockz in Toluol erhalten. Das Produkt wurde durch Filtration als farbloser Feststoff gewonnen und anschließend getrocknet. Eine Probe des erhaltenen Produktes wurde vollständig in DMSO-d6 gelöst und anschließend mit Hilfe von $^1$H-NMR Spektroskopie charakterisiert:

Polyoxymethylengruppengehalt: n = 9.0.
Freier Wassergehalt: 0.4 Gew.%.

Beispiel 8: Azeotroprektifikation einer Formaldehyd-haltigen Suspension i) mit Essigsäureethylester als polares Lösungsmittel (C) und Cyclohexan als unpolares Lösungsmittel (B)

Eine Druckflasche wurde mit Granuform (15.0 g) und VE Wasser (30 mL) befüllt. Durch Erhitzen des Reaktionsgemisches auf 110 °C für ca. 10 Stunden wurde eine klare Formaldehydlösung erhalten (ca. 32 Gew.% Formaldehyd).
Die Formaldehydlösung wurde mit Hilfe eines Rotationsverdampfer auf 87 Gew.% konzentriert: Die Temperatur des Bades betrug 40 °C, der Destillationsdruck betrug zwischen 40 bis 60 mbar mit einer Druckreduktion von 5 mbar/45 Min. Die Dauer der Destillation betrug 3 Stunden. Die erhaltene trübe Suspension (ca. 17.3 g) wurde direkt danach in den Aufbau der Azeotroprektifikation übertragen und mit Essigsäureethylester-1 (75 mL) versetzt. Das Wasser der Formaldehydlösung wurde weiter mittels Azeotroprektifikation bei 40 °C unter vermindertem Druck (240-250 mbar) entfernt. Nach 20 Stunden wurde Cyclohexan zu der erhaltenen Suspension (150 mL) hinzugefügt. Über 5 Stunden wurde die Mischung bei 240-250 mbar und 40 °C destilliert, während 150 mL Cyclohexan während des genannten Zeitraums portionsweise zur Mischung gegeben wurden. Das Produkt wurde durch Filtration als farbloser Feststoff gewonnen und anschließend getrocknet. Eine Probe des erhaltenen Produktes wurde vollständig in DMSO-d6 gelöst und anschließend mit Hilfe von $^1$H-NMR Spektroskopie charakterisiert:

Polyoxymethylengruppengehalt: n = 8.2.
Freier Wassergehalt: 0.3 Gew.%.

Tabelle 1: Zusammenstellung der zahlenmittleren Anzahl an Polyoxymethylenwiederholungseinheiten n sowie des freien Wassergehalts für Polyole enthaltend Polyoxymethylenblöcke für unterschiedliche Prozessbedingungen.

| Beispiel | LM (A) | Gemisch (A) | LM (B) | LM (C) | T(iii) [°C] | p(iii) [mbar] | t(iii) [h] | n[a)] | w($H_2O$) [Gew.-%][b)] |
|---|---|---|---|---|---|---|---|---|---|
| 1 | $H_2O$ | Suspension | Cyclohexan | - | 40 | 240-250 | 25 | 9.0 | 0.3 |
| 2 (Vgl.) | $H_2O$ | Suspension | - | ESEE | 40 | 240-250 | 25 | 5.5 | 5.6 |
| 3 | $H_2O$ | Suspension | p-Xylol | | 40 | 40 | 20 | 9.1 | 0.2 |
| 4 (Vgl.) | $H_2O$ | Suspension | - | - | 40 | 40 | 20 | 7.9 | 6.9 |
| 5 | $H_2O$ | Suspension | Toluol | | 40 | 90 | 20 | 8.8 | 0.3 |
| 6 | $H_2O$ | Suspension | Toluol | | 40 | 90 | 20 | 8.5 | 0.4 |
| 7 | $H_2O$ | Lösung | Toluol | | 40 | 90 | 40 | 9.0 | 0.4 |
| 8 | $H_2O$ | Suspension | Cyclohexan | ESEE | 40 | 240-250 | 25 | 8.2 | 0.3 |
| a) n zahlenmittlere Anzahl an Polyoxymethylenwiederholungseinheiten, b) w($H_2O$) freier Wassergehalt bestimmt mittels Protonenresonanzspektroskopie (Vgl.) Vergleichsbeispiel | | | | | | | | | |

Tabelle 2 Bestimmung der Partikelgrößenverteilung für das Polyol enthaltend einen Polyoxymethylen-Block hergestellt gemäß Beispiel 1 und Beispiel 8.

| Partikelgrößen [μm] | Beispiel 1 [Gew.%] | Beispiel 8 [Gew.%] |
|---|---|---|
| <45 | 1.13 | 4.77 |
| 45-125 | 29.21 | 39.07 |
| 125-250 | 8.64 | 51.47 |
| 250-500 | 14.98 | 4.36 |
| 500-1000 | 10.45 | 0.26 |
| 1000-2000 | 17.87 | 0.07 |
| >2000 | 17.72 | 0 |

**Beispiele zum Herstellungsverfahren von Isocyanatgruppen-terminierten Präpolymeren umfassend einen Polyoxymethylen-Block durch Umsetzung der Polyole umfassend einen Polyoxymethylen-Block gemäß der Beispiele 1 bis 6 mit Toluol-2,4-diisocyanat**

**Beispiel 9:**

Polyol umfassend einen Polyoxymethylen-Block (1.0 g) aus Beispiel 1 wurde durch Rühren in Essigsäureethylester-2 (10 mL) für ca. 10 Stunden bei Raumtemperatur suspendiert. Anschließend wurde in einem anderen Reaktionsgefäß ein Überschuss Toluol-2,4-diisocyanat (ca. 12 g) in Gegenwart eines Dibutylzinndilaurat Katalysator (10-40 mg) vorgelegt und die zuvor gewonnen Suspension bei 40 °C zugetropft. Das Reaktionsgemisch wurde noch eine Stunde bei 40 °C gerührt. Das Lösungsmittel (Essigsäureethylester) wurde unter vermindertem Druck in eine Kühlfalle entfernt, und der Rückstand mit getrocknetem n-Pentan vollständig gewaschen (3-4 Mal) und das Reaktionsprodukt als farbloser Feststoff erhalten.

NCO Präpolymer/Harnstoff Verhältnis: 100/9.
Polyol umfassend einen Polyoxymethylen-Block Umsatz: >95%.

**Beispiel 10 (Vergleich):**

Polyol umfassend einen Polyoxymethylen-Block (1.0 g) aus Beispiel 2 wurde durch Rühren in Essigsäureethylester-2 (10 mL) für ca. 10 Stunden bei Raumtemperatur suspendiert. Anschließend wurde in einem anderen Reaktionsgefäß ein Überschuss Toluol-2,4-diisocyanat (ca. 12 g) in Gegenwart eines Dibutylzinndilaurat Katalysator (10-40 mg) vorgelegt und die zuvor gewonnen Suspension bei 40 °C zugetropft. Das Reaktionsgemisch wurde noch eine Stunde bei 40 °C gerührt. Das Lösungsmittel (Essigsäureethylester) wurde unter vermindertem Druck in eine Kühlfalle entfernt, und der Rückstand mit getrocknetem n-Pentan vollständig gewaschen (3-4 Mal) und das Reaktionsprodukt als farbloser Feststoff erhalten.

NCO Präpolymer/Harnstoff Verhältnis: 100/105.
Polyol umfassend einen Polyoxymethylen-Block Umsatz: >95%.

**Beispiel 11:**

Polyol umfassend einen Polyoxymethylen-Block (1.0 g) aus Beispiel 3 wurde durch Rühren in Essigsäureethylester-2 (10 mL) für ca. 10 Stunden bei Raumtemperatur suspendiert Anschließend wurde in einem anderen Reaktionsgefäß ein Überschuss Toluol-2,4-diisocyanat (ca. 12 g) in Gegenwart eines Dibutylzinndilaurat Katalysator (10-40 mg) vorgelegt und die zuvor gewonnen Suspension bei 40 °C zugetropft. Das Reaktionsgemisch wurde noch eine Stunde bei 40 °C gerührt. Das Lösungsmittel (Essigsäureethylester) wurde unter vermindertem Druck in eine Kühlfalle entfernt, und der Rückstand mit getrocknetem n-Pentan vollständig gewaschen (3-4 Mal) und das Reaktionsprodukt als farbloser Feststoff erhalten.

NCO Präpolymer/Harnstoff Verhältnis: 100/7.
Polyol umfassend einen Polyoxymethylen-Block Umsatz: >95%.

**Beispiel 12 (Vergleich):**

Polyol umfassend einen Polyoxymethylen-Block (1.0 g) aus Beispiel 4 wurde durch Rühren in Essigsäureethylester-2 (10 mL) für ca. 10 Stunden bei Raumtemperatur suspendiert. Anschließend wurde in einem anderen Reaktionsgefäß ein Überschuss Toluol-2,4-diisocyanat (ca. 12 g) in Gegenwart eines Dibutylzinndilaurat Katalysator (10-40 mg) vorgelegt und die zuvor gewonnen Suspension bei 40 °C zugetropft. Das Reaktionsgemisch wurde noch eine Stunde bei 40 °C gerührt. Das Lösungsmittel (Essigsäureethylester) wurde unter vermindertem Druck in eine Kühlfalle entfernt, und der Rückstand mit getrocknetem n-Pentan vollständig gewaschen (3-4 Mal) und das Reaktionsprodukt als farbloser Feststoff erhalten.

NCO Präpolymer/Harnstoff Verhältnis: 100/117.
Polyol umfassend einen Polyoxymethylen-Block Umsatz: >95%.

**Beispiel 13:**

Polyol umfassend einen Polyoxymethylen-Block (1.0 g) aus Beispiel 5 wurde durch Rühren in Essigsäureethylester-2 (10 mL) für ca. 10 Stunden bei Raumtemperatur suspendiert. Anschließend wurde in einem anderen Reaktionsgefäß ein Überschuss Toluol-2,4-diisocyanat (ca. 12 g) in Gegenwart eines Dibutylzinndilaurat Katalysator (10-40 mg) vorgelegt und die zuvor gewonnen Suspension bei 40 °C zugetropft. Das Reaktionsgemisch wurde noch eine Stunde bei 40 °C gerührt. Das Lösungsmittel (Essigsäureethylester) wurde unter vermindertem Druck in eine Kühlfalle entfernt, und der Rückstand mit getrocknetem *n*-Pentan vollständig gewaschen (3-4 Mal) und das Reaktionsprodukt als farbloser Feststoff erhalten.

NCO Präpolymer/Harnstoff Verhältnis: 100/10.
Polyol umfassend einen Polyoxymethylen-Block Umsatz: >95%.

**Beispiel 14:**

Polyol umfassend einen Polyoxymethylen-Block (1.0 g) aus Beispiel 6 wurde durch Rühren in Essigsäureethylester-2 (10 mL) für ca. 10 Stunden bei Raumtemperatur suspendiert. Anschließend wurde in einem anderen Reaktionsgefäß ein Überschuss Toluol-2,4-diisocyanat (ca. 12 g) in Gegenwart eines Dibutylzinndilaurat Katalysator (10-40 mg) vorgelegt und die zuvor gewonnen Suspension bei 40 °C zugetropft. Das Reaktionsgemisch wurde noch eine Stunde bei 40 °C gerührt. Das Lösungsmittel (Essigsäureethylester) wurde unter vermindertem Druck in eine Kühlfalle entfernt, und der Rückstand mit getrocknetem *n*-Pentan vollständig gewaschen (3-4 Mal) und das Reaktionsprodukt als farbloser Feststoff erhalten.

NCO Präpolymer/Harnstoff Verhältnis: 100/14.
Polyol umfassend einen Polyoxymethylen-Block Umsatz: >95%.

**Beispiel 15 (Vergleich): Umsetzung von pFA (Granuform® M) mit Toluoldiisocyanat (TDI) gemäß Beispiel 2 aus US 3575930 A1 (Nachstellung US3575930, Bsp. 2)**

Paraformaldehyd pFA (Granuform® M, 10 g) wurde in einen Kolben mit 90 g Dioxan für 2 min aufgekocht und filtriert. Die so gewonnene Lösung wurde mit 20 mL Benzol versetzt und mit Hilfe einer Azeotropdestillation getrocknet. Anschließend wurden 16,7 g TDI zugesetzt und das Reaktionsgemisch für 6 h auf 91 °C gebracht. Im Gegensatz zu Beispiel 2 aus US 3575930 A1, konnte kein polymeres Produkt direkt aus der Reaktionslösung abfiltriert werden. Auch nach Entfernung der flüchtigen Bestandteile bei 35° C und 10 mbar wurde kein polymeres Produkt oder NCO-Präpolymer erhalten. Das $^1$H NMR Spektrum dieses gelben Rückstands zeigte lediglich Signale, die TDI zugeschrieben werden können. Es konnte kein Aufbau von Polymeren mit NCO-Gruppen oder NCO-Präpolymere beobachtet werden.

NCO Präpolymer/Harnstoff Verhältnis: nicht bestimmbar.

**Beispiel 16 (Vergleich): Umsetzung von Granuform® M mit DMM und Toluol-2,4-diisocyanat (TDI) mittels Reaktiv-Soxhlet-Extraktion (EP 3653657 A1, Bsp. 1)**

10.5 g Granuform® M wurde in der Extraktionshülse eines Soxhlet-Extraktors vorgelegt. Durch Soxhlet-Extraktion mit Dimethoxymethan (kurz DMM) als Lösungsmittel (200 mL) wurde polymeres Formaldehyd unter Rückfluss (60 °C Ölbadtemperatur) extrahiert und im darunter liegenden Kolben mit einem Überschuss TDI zur Reaktion gebracht (12,1 g). Nach 66 Stunden Extraktionszeit wurde das Lösungsmittel unter vermindertem Druck entfernt und der Rückstand mit getrocknetem n-Pentan gewaschen und das Reaktionsprodukt als farbloser Feststoff erhalten.

NCO Präpolymer/Harnstoff Verhältnis: 100/36.

**Beispiel 17 (Vergleich): Herstellung eines Carbamat-geschützten Polyoxymethylen-Polyols durch Umsetzung von Paraformaldehyd mit 4-Tolylisocyanat unter Verwendung eines Fluorid-Salzes (EP349743 A1, Bsp. 1):**

In einen Kolben wurde 450 mg (1 mmol) Paraformaldehyd in 15 mL Dioxolan vorgelegt. Zu der Suspension wurde 315 mg (1 mmol) Tetrabutylammmoniumfluorid-Trihydrat (NBu4F x 3H2O, TBAF) und 6 mg (0,01 mmol) Dubitylzinndilaurat (DBTL) zugegeben und unter Rühren auf 60 °C erwärmt. Zu dem Gemisch wurde 1070 mg (8 mmol) 4-Tolylisocyanat zugegeben und das Reaktionsgemisch über 15 Minuten bei 5000 rpm wurde ein weißer Feststoff von der oberen flüssigen Phase abgetrennt. Aus der flüssigen Phase wurde das Lösungsmittel in einem partiellem Vakuum entfernt und das Produktgemisch als weißer Feststoff erhalten. Ausbeute: 1200 mg (29% unter Berücksichtigung von 720 mg Harnstoff und 260 mg TBAF).

NCO Präpolymer/Harnstoff Verhältnis: 100/1043.

Tabelle 3: Gegenüberstellung der NCO-Präpolymer zu Harnstoff-Verhältnisse sowie Umsätze für Isocyanatgruppen-terminierten Präpolymere.

| Beispiel | Polyol umfassend einen Polyoxymethyle n-Block aus | T [°C] | T [min] | NCO Präpolymer/ Harnstoff Verhältnis | Polyol umfassend einen Polyoxymethylen-Block Umsatz [%] |
|---|---|---|---|---|---|
| 9 | Beispiel 1 | 40 | 60 | 100/9 | >95 |
| 10 (Vgl.) | Beispiel 2 (Vgl.) | 40 | 60 | 100/105 | >95 |
| 11 | Beispiel 3 | 40 | 60 | 100/7 | >95 |
| 12 (Vgl.) | Beispiel 4 (Vgl.) | 40 | 60 | 100/117 | >95 |
| 13 | Beispiel 5 | 40 | 60 | 100/10 | >95 |
| 14 | Beispiel 6 | 40 | 60 | 100/14 | >95 |
| 15 (Vgl.) | - | 91 | 360 | - | n.b. |
| 16 (Vgl.) | - | 60 | 3960 | 100/36 | n.b. |
| 17 (Vgl.) | - | 60 | 180 | 100/1043 | n.b. |
| n.b.: nicht bestimmt. | | | | | |

**Patentansprüche**

1. Verfahren zur Herstellung eines Monols oder Polyols umfassend einen Polyoxymethylen-Block bevorzugt eines Polyols umfassend einen Polyoxymethylen-Block, wobei das Verfahren folgende Schritte umfasst:

   i) Bereitstellen eines Formaldehyd-haltigen Gemisches (A) enthaltend Formaldehyd in einem polaren Lösungsmittel (A) und optional in einem polaren Lösungsmittel (C);
   ii) Zugabe eines unpolaren Lösungsmittels (B) zur Formaldehyd-haltigen Lösung i) oder einer Formaldehyd-haltigen Suspension i) unter Bildung einer Mischung ii);
   iii) Entfernen des Lösungsmittels (A), des Lösungsmittels (B) und optional des Lösungsmittels (C) aus der Mischung ii) unter Bildung des Monols oder Polyols umfassend einen Polyoxymethylen-Block,
   wobei die Entfernung des Lösungsmittels (A), des Lösungsmittels (B) und optional des Lösungsmittels (C) in Schritt iii) bei einer Temperatur von 0 °C bis 80 °C, bevorzugt von 30 °C bis 60 °C und ein Druck von 0.01 mbara bis 5000 mbara, bevorzugt von 0.1 mbara bis 2000 mbara besonders bevorzugt von 1 mbara bis 1000 mbara und ganz besonders bevorzugt von 1 mbara bis 500 mbara erfolgt;
   wobei das Lösungsmittel (A) ungleich dem Lösungsmittel (B) ist;
   und wobei das das Lösungsmittel (B) und optional das Lösungsmittel (C) keine OH-reaktiven funktionellen Gruppen enthalten sowie selbst nicht mit OH-reaktiven Verbindungen reagiert.

2. Verfahren gemäß Anspruch 1, wobei das Formaldehyd-haltige Gemisch (A) erhältlich ist durch Mischen von polymerem Formaldehyd mit dem polaren Lösungsmittel (A) und optional dem polaren Lösungsmittel (C).

**3.** Verfahren gemäß Anspruch 1 oder 2, wobei das polare Lösungsmittel (A) eine oder mehrere Verbindungen ist und ausgewählt wird aus der Gruppe bestehend aus Wasser, Glycerin, Ethylenglycol, Diethylenglycol, Propylenglycol, Dipropylenglycol, Butandiol, bevorzugt Wasser, Ethylenglycol, Diethylenglycol, Propylenglycol, Dipropylenglycol, und besonders bevorzugt Wasser.

**4.** Verfahren gemäß einem der Ansprüche 1 bis 3, wobei das unpolare Lösungsmittel (B) eine oder mehrere Verbindung(en) ist und ausgewählt wird aus der Gruppe bestehend aus Trichloromethan, Trichloroethen, 1,2-Dichloroethan, 1-Bromopropan, 1-Bromobutan, 1-Bromo-2-methylpropan, 1-Chloro-2-methylpropan, 1,2-Dichloropropan, Tetrachlorkohlenstoff, Dichloromethan, Isopropylacetat, Propylacetat, Butylacetat, Isobutylacetat, Ameisensäurepropylester, Ameisensäurebutylester, Ameisensäureisobutylester, Propionsäurepropylester, Propionsäureethylester, Isopentylacetat, Propionsäurebutylester, Buttersäurebutylester, Butylethylether, Dibutylether, Diethylether, Benzol, Toluol, Styrol, m-Xylol, p-Xylol, o-Xylol, Ethylbenzol, Isopropenylbenzol, Isopropylbenzol, Cyclohexen, n, iso-Hexen, n, iso-Hepten, 2-Methyl-1,3-butadien, Methylencyclobutan, 2-Methyl-2-buten, Hexan, Cyclohexan, Heptan, Methylcyclohexan, Octan, 2,2,4-Trimethylpentan, Nonan, Decan, Petrolether, bevorzugt Trichloromethan, Trichloroethen, 1,2-Dichloroethan, 1-Bromopropan, 1-Bromobutan, 1-Bromo-2-methylpropan, 1-Chloro-2-methylpropan, 1,2-Dichloropropan, Tetrachlorkohlenstoff, Dichloromethan, Butylethylether, Dibutylether, Diethylether, Benzol, Toluol, Styrol, m-Xylol, p-Xylol, o-Xylol, Ethylbenzol, Isopropenylbenzol, Isopropylbenzol, Cyclohexen, n, iso-Hexen, n, iso-Hepten, 2-Methyl-1,3-butadien, Methylencyclobutan, 2-Methyl-2-buten, Hexan, Cyclohexan, Heptan, Methylcyclohexan, Octan, 2,2,4-Trimethylpentan, Nonan, Decan, Petrolether besonders bevorzugt Benzol, Toluol, m-Xylol, p-Xylol, o-Xylol, Hexan, Cyclohexan, Heptan, Methylcyclohexan und ganz besonders bevorzugt p-Xylol, Cyclohexan, Methylcyclohexan und Toluol.

**5.** Verfahren gemäß einem der Ansprüche 1 bis 4, wobei das Formaldehyd-haltige Gemisch (A) eine Formaldehyd-haltige Lösung i) oder eine Formaldehyd-haltige Suspension i) bevorzugt eine Formaldehyd-haltige Suspension i) ist.

**6.** Verfahren gemäß einem der Ansprüche 1 bis 5, wobei Schritt i) folgende Schritte umfasst:

i-1) Bereitstellen einer Formaldehyd-haltigen Lösung i) im Lösungsmittel (A) bevorzugt Wasser
i-2) Optional Zugabe eines polaren Lösungsmittels (C) zu der Formaldehyd-haltigen Lösung i)
i-3) Reduktion des Lösungsmittels (A) und optional des Lösungsmittels (C) unter Bildung einer Formaldehyd-haltigen Suspension i-3).

**7.** Verfahren gemäß Anspruch 6, wobei Schritt i) weiterhin folgende Schritte umfasst:

i-4) Zugabe eines polaren Lösungsmittels (C) zu der Formaldehyd-haltigen Suspension i-3) unter Bildung eines Formaldehyd-haltigen Gemisches i-4),
i-5) Reduktion des Lösungsmittels (A) und optional des Lösungsmittels (C) aus dem Formaldehyd-haltigen Gemisch i-4) unter Bildung einer Formaldehyd-haltigen Suspension i-5),

**8.** Verfahren gemäß einem der Ansprüche 1 bis 7, wobei das polare Lösungsmittel (C) eine oder mehrere Verbindungen ist und ausgewählt wird aus der Gruppe bestehend aus Nitromethane, Acetonitrile, Methylacetat, 1,3-Dioxolan, Ameisensäureethylester, Dimethoxymethan, Tetrahydrofuran, Ethylacetat, 1,4-Dioxan, Propansäuremethylester, Ethylenglycol Dimethylether, Diethylenglycol Dimethylether, 2-Butanon, bevorzugt Nitromethan, Ethylacetat, Propansäuremethylester, und Ameisensäureethylester besonders bevorzugt Ethylacetat.

**9.** Verfahren gemäß einem der Ansprüche 1 bis 8, wobei das Verfahren noch folgende Schritte umfasst:

iv) Auftrennen des Lösungsmittelgemisches umfassend das polare Lösungsmittel (A), das unpolare Lösungsmittel (B) und optional das polare Lösungsmittel (C) aus Schritt iii)
v) Zurückführen des unpolaren Lösungsmittels (B) in Schritt ii)

**Claims**

**1.** Method for preparing a monol or polyol comprising a polyoxymethylene block, preferably a polyol comprising a polyoxymethylene block, the method comprising the following steps:

i) providing a formaldehyde-containing mixture (A) containing formaldehyde in a polar solvent (A) and optionally in a polar solvent (C);

ii) adding a nonpolar solvent (B) to the formaldehyde-containing solution i) or to a formaldehyde-containing suspension i) to form a mix ii);

iii) removing the solvent (A), the solvent (B) and optionally the solvent (C) from the mix ii) to form the monol or polyol comprising a polyoxymethylene block,

wherein the solvent (A), the solvent (B) and optionally the solvent (C) are removed in step iii) at a temperature from 0°C to 80°C, preferably from 30°C to 60°C, and a pressure from 0.01 °mbara to 5000 °mbara, preferably from 0.1 °mbara to 2000 °mbara, particularly preferably from 1 mbara to 1000 mbara, and most preferably from 1 mbara to 500 mbara;

wherein the solvent (A) is not the same as the solvent (B);

and wherein the solvent (B) and optionally the solvent (C) do not contain any OH-reactive functional groups and do not themselves react with OH-reactive compounds.

2. Method according to claim 1, wherein the formaldehyde-containing mixture (A) is obtainable by mixing polymer formaldehyde with the polar solvent (A) and optionally the polar solvent (C).

3. Method according to claim 1 or 2, wherein the polar solvent (A) is one or more compounds and is selected from the group consisting of water, glycerol, ethylene glycol, diethylene glycol, propylene glycol, dipropylene glycol, butanediol, preferably water, ethylene glycol, diethylene glycol, propylene glycol, dipropylene glycol, and particularly preferably water.

4. Method according to any of claims 1 to 3, wherein the nonpolar solvent (B) is one or more compounds and is selected from the group consisting of trichloromethane, trichloroethene, 1,2-dichloroethane, 1-bromopropane, 1-bromobutane, 1-bromo-2-methylpropane, 1-chloro-2-methylpropane, 1,2-dichloropropane, carbon tetrachloride, dichloromethane, isopropyl acetate, propyl acetate, butyl acetate, isobutyl acetate, propyl formate, butyl formate, isobutyl formate, propyl propionate, ethyl propionate, isopentyl acetate, butyl propionate, butyl butyrate, butyl ethyl ether, dibutyl ether, diethyl ether, benzene, toluene, styrene, m-xylene, p-xylene, o-xylene, ethyl benzene, isopropenyl benzene, isopropyl benzene, cyclohexene, n, isohexene, n, isoheptene, 2-methyl-1,3-butadiene, methylenecyclobutane, 2-methyl-2-butene, hexane, cyclohexane, heptane, methylcyclohexane, octane, 2,2,4-trimethylpentane, nonane, decane, petroleum ether, preferably trichloromethane, trichloroethene, 1,2-dichloroethane, 1-bromopropane, 1-bromobutane, 1-bromo-2-methylpropane, 1-chloro-2-methylpropane, 1,2-dichloropropane, carbon tetrachloride, dichloromethane, butyl ethyl ether, dibutyl ether, diethyl ether, benzene, toluene, styrene, m-xylene, p-xylene, o-xylene, ethyl benzene, isopropenyl benzene, isopropyl benzene, cyclohexene, n, isohexene, n, isoheptene, 2-methyl-1,3-butadiene, methylenecyclobutane, 2-methyl-2-butene, hexane, cyclohexane, heptane, methylcyclohexane, octane, 2,2,4-trimethylpentane, nonane, decane, petroleum ether, particularly preferably benzene, toluene, m-xylene, p-xylene, o-xylene, hexane, cyclohexane, heptane, methylcyclohexane, and very particularly preferably p-xylene, cyclohexane, methylcyclohexane and toluene.

5. Method according to any of claims 1 to 4, wherein the formaldehyde-containing mixture (A) is a formaldehyde-containing solution i) or a formaldehyde-containing suspension i), preferably a formaldehyde-containing suspension i).

6. Method according to any of claims 1 to 5, wherein step i) comprises the following steps:

i-1) providing a formaldehyde-containing solution i) in the solvent (A), preferably water

i-2) optionally adding a polar solvent (C) to the formaldehyde-containing solution i)

i-3) reducing the solvent (A) and optionally the solvent (C) to form a formaldehyde-containing suspension i-3).

7. Method according to claim 6, wherein step i) further comprises the following steps:

i-4) adding a polar solvent (C) to the formaldehyde-containing suspension i-3) to form a formaldehyde-containing mixture i-4),

i-5) reducing the solvent (A) and optionally the solvent (C) from the formaldehyde-containing mixture i-4) to form a formaldehyde-containing suspension i-5).

8. Method according to any of claims 1 to 7, wherein the polar solvent (C) is one or more compounds and is selected from the group consisting of nitromethane, acetonitrile, methyl acetate, 1,3-dioxolane, ethyl formate, dimethoxymethane, tetrahydrofurane, ethyl acetate, 1,4-dioxane, methyl propionate, ethylene glycol dimethyl ether, diethylene glycol dimethyl ether, 2-butanone, preferably nitromethane, ethyl acetate, methyl propionate and ethyl formate, particularly preferably ethyl acetate.

9. Method according to any of claims 1 to 8, wherein the method also comprises the following steps:

> iv) separating the solvent mixture comprising the polar solvent (A), the nonpolar solvent (B) and optionally the polar solvent (C) from step iii)
> v) returning the nonpolar solvent (B) to step ii).

**Revendications**

1. Procédé pour la production d'un monol ou d'un polyol comprenant un bloc de polyoxyméthylène, de préférence d'un polyol comprenant un bloc de polyoxyméthylène, dans lequel le procédé comprend les étapes suivantes :

> i) fourniture d'un mélange (A) contenant du formaldéhyde qui contient du formaldéhyde dans un solvant polaire (A) et éventuellement dans un solvant polaire (C) ;
> ii) ajout d'un solvant non polaire (B) à la solution i) contenant du formaldéhyde ou à une suspension i) contenant du formaldéhyde pour former une composition ii) ;
> iii) élimination du solvant (A), du solvant (B) et éventuellement du solvant (C) de la composition ii) pour former le monol ou le polyol comprenant un bloc de polyoxyméthylène,
>
> dans lequel l'élimination du solvant (A), du solvant (B) et éventuellement du solvant (C) à l'étape iii) s'effectue à une température allant de 0 °C à 80 °C, de préférence de 30 °C à 60 °C et à une pression allant de 0,01 °mbar à 5000°mbars, de préférence de 0,1°mbar à 2000°mbars, de manière particulièrement préférée de 1 mbar à 1000 mbars et plus préférablement encore de 1 mbar à 500 mbars ;
> dans lequel le solvant (A) est différent du solvant (B) ;
> et dans lequel le solvant (B) et éventuellement le solvant (C) ne contiennent pas de groupes fonctionnels réactifs avec OH et ne réagissent pas eux-mêmes avec des composés réactifs avec OH.

2. Procédé selon la revendication 1, dans lequel le mélange (A) contenant du formaldéhyde peut être obtenu en mélangeant du formaldéhyde polymère avec le solvant polaire (A) et éventuellement le solvant polaire (C).

3. Procédé selon la revendication 1 ou 2, dans lequel le solvant polaire (A) est un ou plusieurs composés et est choisi dans le groupe constitué d'eau, glycérol, éthylèneglycol, diéthylèneglycol, propylèneglycol, dipropylèneglycol, butanediol, de préférence l'eau, éthylèneglycol, diéthylèneglycol, propylèneglycol, dipropylèneglycol, et de manière particulièrement préférée l'eau.

4. Procédé selon l'une des revendications 1 à 3, dans lequel le solvant non polaire (B) est un ou plusieurs composés et est choisi dans le groupe constitué du trichlorométhane, trichloroéthène, 1,2-dichloroéthane, 1-bromopropane, 1-bromobutane, 1-bromo-2-méthylpropane, 1-chloro-2-méthylpropane, 1,2-dichloropropane, tétrachlorure de carbone, dichlorométhane, acétate d'isopropyle, acétate de propyle, acétate de butyle, acétate d'isobutyle, ester propylique d'acide formique, ester butylique d'acide formique, ester isobutylique d'acide formique, ester propylique d'acide propionique, ester éthylique d'acide propionique, acétate d'isopentyle, ester butylique d'acide propionique, ester butylique d'acide butyrique, éther butyl-éthylique, éther dibutylique, éther diéthylique, benzène, toluène, styrène, m-xylène, p-xylène, o-xylène, éthylbenzène, isopropénylbenzène, isopropylbenzène, cyclohexène, n, iso-hexène, n, iso-heptène, 2-méthyl-1,3-butadiène, méthylènecyclobutane, 2-méthyl-2-butène, hexane, cyclohexane, heptane, méthylcyclohexane, octane, 2,2,4-triméthylpentane, nonane, décane, éther de pétrole, de préférence trichlorométhane, trichloroéthène, 1,2-dichloroéthane, 1-bromopropane, 1-bromobutane, 1- bromo-2-méthylpropane, 1-chloro-2-méthylpropane, 1,2-dichloropropane, tétrachlorure de carbone, dichlorométhane, éther butyl-éthylique, éther dibutylique, éther diéthylique, benzène, toluène, styrène, m-xylène, p-xylène, o-xylène, éthylbenzène, Isopropénylbenzène, isopropylbenzène, cyclohexène, n, iso-hexène, n, iso-heptène, 2-méthyl-1,3-butadiène, méthylène-cyclobutane, 2-méthyl-2-butène, hexane, cyclohexane, heptane, méthylcyclohexane, octane, 2,2,4-triméthylpentane, nonane, décane, éther de pétrole, de manière particulièrement préférée benzène, toluène, m-xylène, p-xylène, o-xylène, hexane, cyclohexane, heptane, méthylcyclohexane, et plus préférablement encore p-xylène, cyclohexane, méthylcyclohexane et toluène.

**5.** Procédé selon l'une des revendications 1 à 4, dans lequel le mélange (A) contenant du formaldéhyde est une solution i) contenant du formaldéhyde ou une suspension i) contenant du formaldéhyde, de préférence une suspension i) contenant du formaldéhyde.

**6.** Procédé selon l'une des revendications 1 à 5, dans lequel l'étape i) comprend les étapes suivantes :

  i-1) préparation d'une solution i) contenant du formaldéhyde dans le solvant (A), de préférence de l'eau
  i-2) ajout éventuel d'un solvant polaire (C) à la solution i) contenant du formaldéhyde
  i-3) réduction du solvant (A) et éventuellement du solvant (C) pour former une suspension i-3) contenant du formaldéhyde.

**7.** Procédé selon la revendication 6, dans lequel l'étape i) comprend en outre les étapes suivantes :

  i-4) ajout d'un solvant polaire (C) à la suspension i-3) contenant du formaldéhyde pour former un mélange i-4) contenant du formaldéhyde,
  i-5) réduction du solvant (A) et éventuellement du solvant (C) à partir du mélange i-4) contenant du formaldéhyde pour former une suspension i-5) contenant du formaldéhyde.

**8.** Procédé selon l'une des revendications 1 à 7, dans lequel le solvant polaire (C) est un ou plusieurs composés et est choisi dans le groupe constitué du nitrométhane, acétonitrile, acétate de méthyle, 1,3-dioxolane, ester éthylique d'acide formique, diméthoxyméthane, tétrahydrofurane, acétate d'éthyle, 1,4-dioxane, ester méthylique d'acide propanoïque, éther diméthylique de l'éthylène glycol, éther diméthylique du diéthylène glycol, 2-butanone, de préférence le nitrométhane, acétate d'éthyle, ester méthylique d'acide propanoïque, et ester éthylique d'acide formique, de manière particulièrement préférée l'acétate d'éthyle.

**9.** Procédé selon l'une des revendications 1 à 8, dans lequel le procédé comprend en outre les étapes suivantes :

  iv) séparation du mélange de solvants comprenant le solvant polaire (A), le solvant non polaire (B) et, éventuellement, le solvant polaire (C) de l'étape iii)
  v) recyclage du solvant non polaire (B) à l'étape ii)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2007211082 A
- WO 2004096746 A1
- GB 807589 A
- EP 1418190 A1
- US 3754053 A
- US 3575930 A
- US 20020016395 A
- EP 3129419 B1
- JP 4306215 A
- EP 3653657 A1
- DE 2649800
- EP 3498743 A1
- WO 2014095679 A1
- WO 2020099601 A1
- US 1948069 A
- US 2823237 A
- EP 3080177 B1
- WO 1981001712 A1
- US 3436375 A
- JP 03263454 B
- JP 2928823 B
- US 3575930 A1

**In der Beschreibung aufgeführte Nicht-Patentliteratur**

- *Bull. Chem. Soc. J.*, 1994, vol. 67, 2560-2566
- **G. REUS**. Formaldehyde. *Ullmann's Encyclopedia of Industrial Chemistry*, 2012, vol. 2012